(19) Europäisches Patentamt
European Patent Office
Office européen des brevets

(11) **EP 4 683 281 A1**

(12) **EUROPEAN PATENT APPLICATION**

(43) Date of publication:
**21.01.2026 Bulletin 2026/04**

(21) Application number: **25189885.4**

(22) Date of filing: **16.07.2025**

(51) International Patent Classification (IPC):
***H04L 27/34*** *(2006.01)*

(52) Cooperative Patent Classification (CPC):
**H04L 27/3411**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.07.2024 US 202463671986 P**
**31.01.2025 US 202519043294**

(71) Applicant: **Marvell Asia Pte Ltd**
**Singapore 369522 (SG)**

(72) Inventors:
• **Morero, Damian Alfonso**
  **Rio Ceballos, Cordoba (AR)**
• **Lopez, Ramiro Rogelio**
  **5000 Cordoba (AR)**
• **Trasobares, Fernando**
  **Cordoba (AR)**
• **Castrillon, Mario**
  **Cordoba (AR)**

(74) Representative: **Grünecker Patent- und Rechtsanwälte**
**PartG mbB**
**Leopoldstraße 4**
**80802 München (DE)**

(54) **ENCODING AND DECODING USING PROBABILISTIC SHAPING**

(57)    A transmitter generates a set of transmission symbols corresponding to a set of information bits. Generating the set of transmission symbols includes: performing probabilistic constellation shaping to set, in the set of transmission symbols, a quantity n1 of transmission symbols having a maximum transmission symbol amplitude value. Performing of the probabilistic constellation shaping includes performing a recursive procedure to map the set of information bits to a set of amplitude indicators that corresponds to amplitudes of transmission symbols. The set of amplitude indicators includes n1 amplitude indicators set to indicate the maximum transmission symbol amplitude value.

*FIG. 1*

Maps set of information bits to set of amplitude indicators that corresponds to amplitudes of transmission symbols in to be transmitted; determines, for the set of amplitude indicators, a quantity n1 of amplitude indicators set to a maximum amplitude value, and performs a recursive constant composition distribution matching encoding procedure to successively generate, using n1, sets of increasingly smaller sequences such that each set of sequences indicates n1 transmission symbol amplitudes having the maximum amplitude value

Determines respective parameters n1 for subsets of a set amplitude indicators corresponding to received transmission symbols, each n1 corresponding to a quantity of amplitude indicators in the corresponding subset set to the maximum amplitude; performs a recursive constant composition distribution matching decoding procedure to successively generate, using the n1 parameters, sets of increasingly larger indices to generate an output index that indicates a set of information bits

Processed by Luminess, 75001 PARIS (FR)

## Description

### Cross References to Related Applications

This application claims the benefit of U.S. Provisional Patent App. No. 63/671,986, entitled "Efficient Encoding and Decoding in Probabilistic Shaping," filed on July 16, 2024, which is incorporated herein by reference in its entirety for all purposes.

### Field of Technology

The present disclosure relates generally to communication technology, and more particularly to probabilistic constellation shaping in a transceiver.

### Background

The approaches described in this background section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Networking speed requirements are evolving rapidly. In the early days of the Internet, for example, popular applications were limited to email, bulletin boards, and mostly informational and text-based web page surfing, and the amount of data transferred was usually relatively small as compared to today. Now, Internet and mobile communication applications demand an extremely large amount of bandwidth (as compared to even 15 years ago) for transferring photos, video, music, and other multimedia files. For example, some popular social media networks generates about 4 petabytes (PB) of data daily. As another example, some artificial intelligence/machine learning (AI/ML) systems require extremely high bandwidth to train and operate AI/ML models.

As a result of ever increasing communication bandwidth needs, existing data communication systems must continually increase their capacity.

Optical communication is a significant technological area that is growing to address the increasing bandwidth demands of communication networks. The performance of optical communication systems is negatively impacted by channel impairments caused by characteristics of a transmitter, a receiver, and/or an optical fiber between the transmitter and the receiver. Additionally, power usage in optical communication networks is also an element of their performance, and thus improving performance typically also involves reducing power consumption.

One technique for improving performance of optical communication networks is referred to as "constellation shaping." Constellation shaping involves modifying a distribution of the transmission symbols to better match characteristics of a communication channel. For instance, in a channel having additive noise, constellation shaping typically involves transmitting high-energy transmission symbols less frequently than low-energy transmission symbols. More generally, constellation shaping typically involves sending some types of transmission symbols more frequently and other types of transmission symbols less frequently to optimize a signal quality at a destination, and/or to maintain the same signal quality while using less power consumption.

In probabilistic constellation shaping, a "distribution matcher" in a transmitter maps user data to constellation points such that a probability of high-energy constellation points being transmitted is less than a probability of low-energy constellation points being transmitted.

### Summary

In an embodiment, a transceiver comprises processing circuitry. The processing circuitry is configured to: receive information to be transmitted via one or more optical communication media, the information including a first set of information bits; generate a second set of transmission symbols corresponding to the first set of information bits. The generation of the second set of transmission symbols includes: performing probabilistic constellation shaping to set, in the second set of transmission symbols, a quantity $n1$ of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including $n1$ amplitude indicators set to indicate the maximum transmission symbol amplitude value. The processing circuitry is further configured to generate one or more drive signals based on the second set of transmission symbols. The transceiver also comprises an optical transceiver configured to generate one or more optical transmit signals based on the one or more drive signals.

In another embodiment, a method for transmitting information in a communication system includes: receiving, at a processing circuitry of a transceiver, information to be transmitted, the information including a first set of information bits; and generating, by the processing circuitry, a second set of transmission symbols corresponding to the first set of information bits. Generating the second set of transmission symbols includes: performing probabilistic constellation shaping to set, in the second set of transmission symbols, a quantity $n1$ of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including $n1$ amplitude indicators set to indicate the maximum transmission symbol amplitude value. The method also includes generating, by the transceiver, a transmit signal based on the second set of transmission symbols.

In yet another embodiment, a method for decoding a received signal in a communication system includes: receiving, at processing circuitry of a transceiver, a first set of amplitude indicators that corresponds to amplitudes of transmission symbols in a second set of transmission symbols received by the transceiver, the first set of amplitude indicators having $n1$ amplitude indicators set to indicate a maximum transmission symbol amplitude value, the second set of transmission symbols having been transmitted by a transmitter using probabilistic constellation shaping; determining, by the processing circuitry, a plurality of indices corresponding to respective subsets of the first set of amplitude indicators, each subset of the first set of amplitude indicators having $n1'$ amplitude indicators set to indicate the maximum transmission symbol amplitude value, each index specifying a respective subset from amongst a group of potential subsets having $n1'$ indicators set to indicate the maximum transmission symbol amplitude value; performing, by the processing circuitry, a recursive procedure to generate, using the plurality of indices corresponding to respective subsets of the first set of amplitude indicators, a single index specifying the first set of amplitude indicators from amongst a group of potential sets of amplitude indicators having $n1$ indicators set to indicate the maximum transmission symbol amplitude value; and mapping, by the processing circuitry, the single index to a third set of information bits.

In still another embodiment, a transceiver comprises: an optical transceiver configured to receive one or more optical signals, the one or more optical signals having been transmitted by a transmitter using probabilistic constellation shaping; and processing circuitry. The processing circuitry is configured to: receive a first set of amplitude indicators that corresponds to amplitudes of transmission symbols in the one or more optical signals, the first set of amplitude indicators having $n1$ amplitude indicators set to indicate a maximum transmission symbol amplitude value; determine a plurality of indices corresponding to respective subsets of the first set of amplitude indicators, each subset of the first set of amplitude indicators having $n1'$ amplitude indicators set to indicate the maximum transmission symbol amplitude value, each index specifying a respective subset from amongst a group of potential subsets having $n1'$ indicators set to indicate the maximum transmission symbol amplitude value; perform a recursive procedure to generate, using the plurality of indices corresponding to respective subsets of the first set of amplitude indicators, a single index specifying the first set of amplitude indicators from amongst a group of potential sets of amplitude indicators having $n1$ indicators set to indicate the maximum transmission symbol amplitude value; and map the single index to a second set of information bits.

In another embodiment, an apparatus comprises processing circuitry. The processing circuitry is configured to: receive information to be transmitted via one or more optical communication media, the information including a first set of information bits; generate a second set of transmission symbols corresponding to the first set of information bits. The generation of the second set of transmission symbols includes: performing probabilistic constellation shaping to set, in the second set of transmission symbols, a quantity $n1$ of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including $n1$ amplitude indicators set to indicate the maximum transmission symbol amplitude value.

In still another embodiment, a method for generating a communication signal includes: receiving, at a processing circuitry, information to be transmitted, the information including a first set of information bits; and generating, by the processing circuitry, a second set of transmission symbols corresponding to the first set of information bits. Generating the second set of transmission symbols includes: performing probabilistic constellation shaping to set, in the second set of transmission symbols, a quantity $n1$ of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including $n1$ amplitude indicators set to indicate the maximum transmission symbol amplitude value.

In yet another embodiment, an apparatus includes processing circuitry. The processing circuitry is configured to: receive a first set of amplitude indicators that corresponds to amplitudes of transmission symbols received via one or more communication media, the first set of amplitude indicators having $n1$ amplitude indicators set to indicate a maximum transmission symbol amplitude value; determine a plurality of indices corresponding to respective subsets of the first set of amplitude indicators, each subset of the first set of amplitude indicators having $n1'$ amplitude indicators set to indicate the maximum transmission symbol amplitude value, each index specifying a respective subset from amongst a group of potential subsets having n1' indicators set to indicate the maximum transmission symbol amplitude value; perform a recursive procedure to generate, using the plurality of indices corresponding to respective subsets of the first set of amplitude indicators, a single index specifying the first set of amplitude indicators from amongst a group of potential sets of amplitude indicators having n1 indicators set to indicate the maximum transmission symbol amplitude value; and map the single index to a second set of information bits.

## Brief Description of the Drawings

Fig. 1 is a simplified block diagram of an example optical communication device that employs probabilistic constellation shaping, according to an embodiment.

Fig. 2 is a simplified block diagram of example distribution matcher encoder circuitry of the optical communication device of Fig. 1, according to an embodiment.

Fig. 3 illustrates example pseudocode for implementing a multiplication function associated with a probabilistic constellation shaping employed by the optical communication device of Fig. 1, according to an embodiment.

Fig. 4 illustrates example pseudocode for implementing a truncation function performed by the distribution matcher encoder circuitry of Fig. 2, according to an embodiment.

Figs. 5A-C illustrate numbers of sequences represented by a product $A \cdot B$ for different numbers of iterations of the multiplication function illustrated in Fig. 3, according to an embodiment.

Fig. 6 illustrates example pseudocode for implementing a non-constant composition distribution matcher encoding operation performed by the distribution matcher encoder circuitry of Fig. 2, according to an embodiment.

Fig. 7 illustrates example pseudocode for implementing an operation, performed by the distribution matcher encoder circuitry of Fig. 2, for determining a number of logic ones in a sequence that will be generated by the distribution matcher encoder circuitry, according to an embodiment.

Fig. 8 illustrates example pseudocode for implementing a division operation performed by the distribution matcher encoder circuitry of Fig. 2, according to an embodiment.

Fig. 9 illustrates example pseudocode for generating content of memories of the distribution matcher encoder circuitry of Fig. 2, according to an embodiment.

Fig. 10 illustrates example pseudocode describing operation of the distribution matcher encoder circuitry of Fig. 2, according to an embodiment.

Fig. 11 is a simplified block diagram of example distribution matcher decoder circuitry of the optical communication device of Fig. 1, according to an embodiment.

Fig. 12 illustrates example pseudocode for implementing a multiplication function performed by the distribution matcher decoder circuitry of Fig. 11, according to an embodiment.

Fig. 13 illustrates example pseudocode describing operation of the distribution matcher decoder circuitry of Fig. 11, according to an embodiment.

Fig. 14 illustrates example pseudocode for implementing a non-constant composition distribution matcher decoding operation performed by the distribution matcher decoder circuitry of Fig. 11, according to an embodiment.

Fig. 15 is a flow diagram of an example method for transmitting information in a communication system using probabilistic constellation shaping, according to an embodiment.

Fig. 16 is a flow diagram of an example method for decoding a received signal in a communication system, according to another embodiment.

## Detailed Description

Embodiments of improved techniques for implementing probabilistic constellation shaping are described below. For example, processing circuitry of a transceiver performs probabilistic constellation shaping to set, in a sequence of transmission symbols, a quantity n1 of transmission symbols having a particular transmission symbol amplitude value (e.g., a maximum transmission amplitude value from amongst a set of different transmission amplitudes), where n1 is a suitable positive integer, according to an embodiment. The performing of the probabilistic constellation shaping includes performing a recursive constant composition distribution matcher encoding procedure to map a sequence of information bits to a sequence of amplitude indicators that corresponds to amplitudes of transmission symbols, according to an embodiment. For example, the quantity n1 is determined, and the recursive constant composition distribution matcher encoding procedure successively generates, using n1, sets of increasingly smaller sequences such that each set of sequences indicates n1 transmission symbols having the particular transmission symbol amplitude value, according to an embodiment.

In an embodiment, the performing of the probabilistic constellation shaping includes i) performing a non-constant composition distribution matcher encoding procedure to determine, using the set of information bits, a) the quantity n1 and b) an index that identifies a sequence of transmission symbol amplitude indicators having n1 amplitudes set to the particular transmission symbol amplitude value (e.g., a maximum transmission amplitude value); and ii) performing a constant composition distribution matcher encoding procedure, using n1 and the index, to map the index to the sequence of transmission symbol amplitude indicators having n1 amplitudes set to the particular transmission symbol amplitude value (e.g., a maximum transmission amplitude value), according to an embodiment.

With regard to receiving a communication signal, a transceiver receives a set of transmission symbols having a quantity n1 of transmission symbols having the particular transmission symbol amplitude value (e.g., the maximum transmission amplitude value), the set of transmission symbols having been transmitted by a transmitter that performs probabilistic constellation shaping, according to another embodiment. Processing circuitry of the transceiver performs a recursive constant composition distribution matcher decoding procedure to map a sequence of amplitude indicators that corresponds to amplitudes of transmission symbols in the set received by the transceiver to a sequence of information bits, according to an embodiment. For example, the quantity n1 is determined, and the recursive constant composition distribution matcher decoding procedure successively generates, using n1, sets of increasingly larger sequences such that each set of sequences indicates n1 transmission symbols having the particular transmission symbol amplitude value, according to an embodiment.

In an embodiment, processing a sequence of amplitude indicators corresponding to a received communication signal includes i) performing a constant composition distribution matcher decoding procedure, using n1 and the sequence of transmission symbol amplitude indicators, to map the sequence of transmission symbol amplitude indicators to an index that identifies the sequence of transmission symbol amplitude indicators from among a set of possible sequences of transmission symbol amplitude indicators with n1 amplitudes set to the particular transmission symbol amplitude value (e.g., a maximum transmission amplitude value); and ii) performing a non-constant composition distribution matcher decoding procedure to determine, using the index and the quantity n1, a set of information bits, according to an embodiment.

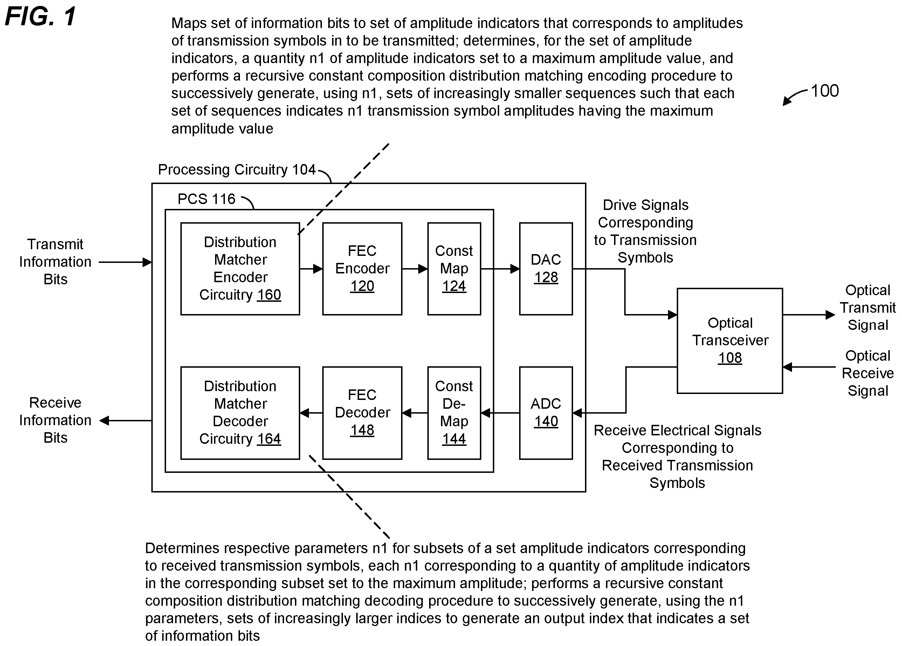

Fig. 1 is a simplified block diagram of an example optical communication device 100 that employs probabilistic constellation shaping, according to an embodiment. The optical communication device 100 includes processing circuitry 104 coupled to an optical transceiver 108. Regarding transmit functionality, the processing circuitry 104 generally maps information bits to be transmitted ("transmit information bits") to transmission symbols, and generates one or more drive signals configured to control the optical transceiver 108 to generate optical transmission symbols for transmission via a suitable optical communication medium or media, such as one or more optical cables, free space, etc. Regarding receive functionality, the optical transceiver 108 receives optical transmission symbols via the optical medium or media, and generates electrical signals corresponding to the received optical transmission symbols ("receive electrical signals"). The processing circuitry 104 generally extracts information bits encoded in the receive electrical signals ("receive information bits").

The processing circuitry 104 includes probabilistic constellation shaping (PCS) circuitry 116 that is configured to perform PCS processing procedures such as data framing, data encoding, data decoding, scrambling, de-scrambling, etc. Regarding transmit functionality, the PCS circuitry 116 is configured to receive transmit information bits and generate frames of PCS encoded transmit information bits. Regarding receive functionality, the PCS circuitry 116 is configured to receive frames of PCS encoded receive information bits and output decoded receive information bits.

A forward error correction (FEC) encoder 120 is configured to receive frames of encoded transmit information bits and perform an FEC encoding procedure to generate FEC codewords. Constellation mapping circuitry 124 is configured to map FEC codeword symbols to constellation points, and generate constellation point signals that indicate the constellation points. A digital-to-analog converter (DAC) 128 is configured to convert digital signals indicating the constellation points to analog drive signals configured to control the optical transceiver 108 to generate the optical transmission symbols for transmission.

An analog-to-digital converter (ADC) 140 is configured to convert the receive electrical signals to digital receive signals. Constellation de-mapping circuitry 144 is configured to detect constellation symbols based on the digital receive signals, and generate FEC codewords corresponding to the detected constellation points. An FEC decoder 148 is configured to perform an FEC decoding procedure to decode the FEC codewords to generate frames of PCS-encoded data.

The PCS circuitry 116 includes distribution matcher encoder circuitry 160 that is configured to perform probabilistic constellation shaping operations. For example, the distribution matcher encoder circuitry 160 is configured to determine, for a sequence of transmission symbols to be transmitted by the transceiver 100, a quantity n1 of transmission symbols having a particular transmission symbol amplitude value (e.g., a maximum transmission amplitude value from amongst a set of different transmission amplitudes), where n1 is a suitable positive integer, according to an embodiment. As will be described in more detail below, the performing of the probabilistic constellation shaping includes performing a recursive constant composition distribution matcher encoding procedure to map a sequence of information bits to a sequence of amplitude indicators that corresponds to amplitudes of transmission symbols, according to an embodiment. For example, the distribution matcher encoder circuitry 160 determines, for the sequence of transmission symbols, the quantity n1, and the distribution matcher encoder circuitry 160 performs the recursive constant composition distribution matcher encoding procedure to successively generate, using n1, sets of increasingly smaller sequences such that each set of sequences indicates n1 transmission symbols having the particular transmission symbol amplitude value, according to an embodiment.

The PCS circuitry 116 also includes distribution matcher decoder circuitry 164 that is configured to perform a recursive constant composition distribution matcher decoding procedure to map a sequence of amplitude indicators that corresponds to amplitudes of transmission symbols in the set received by the transceiver 100 to a sequence of information bits, according to an embodiment. For example, the distribution matcher decoder circuitry 164 determines the quantity n1 for a set of transmission symbols received by the transceiver 100, and the recursive constant composition distribution matcher decoding procedure successively generates, using n1, sets of increasingly larger sequences such that each set of sequences indicates n1 transmission symbols having the particular transmission symbol amplitude value, according to an embodiment.

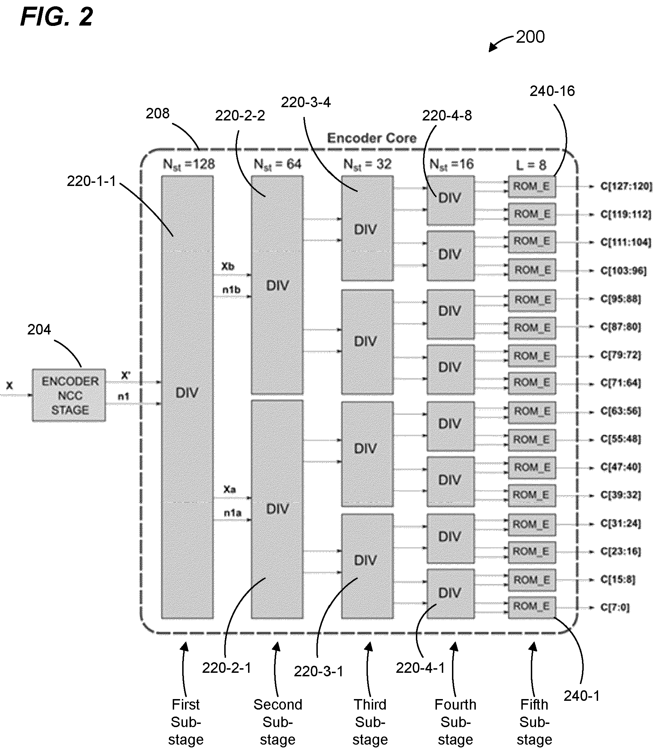

Fig. 2 is a simplified block diagram of distribution matcher encoder circuitry 200, according to an embodiment. The distribution matcher encoder circuitry 200 is included in the distribution matcher encoder circuitry 160 of Fig. 1, according to an embodiment, and Fig. 2 is described with reference to Fig. 1 for ease of explanation. The distribution matcher encoder circuitry 160 has another suitable structure different than the distribution matcher encoder circuitry 200, in another embodiment. Additionally, the distribution matcher encoder circuitry 200 is included in another suitable transceiver different than the transceiver 100 of Fig. 1, in another embodiment.

In Fig. 2, a vector X corresponds to a set of information bits to be transmitted by the transceiver 100, and a vector C corresponds to a set of transmission symbol amplitudes corresponding to a set of transmission symbols to be transmitted by the transceiver 100. In an illustrative embodiment, the vector X has a length of 116 and the vector C has a length of 128. Thus, the distribution matcher encoder circuitry 200 maps a set of 116 information bits to a set of 128 amplitudes corresponding to a set of 128 transmission symbols. In other embodiments, the vector X has another suitable length different than 116 and/or the vector C has another suitable length different than 128.

The distribution matcher encoder circuitry 200 is configured to operate in a transceiver configured to generate transmission symbols that can have one of two amplitudes, i.e., one of a first transmission symbol amplitude and a second transmission symbol amplitude, where the second transmission symbol amplitude is greater than the first transmission symbol amplitude. With such a transceiver, the second transmission symbol amplitude corresponds to a maximum transmission symbol amplitude. To improve performance of a communication system that includes the transceiver 100, it is useful to perform probabilistic constellation shaping to limit a quantity of transmission symbols having the second transmission symbol amplitude that are transmitted by the transceiver.

Each element of the vector C can have one of two logic values, e.g., one of logic zero and logic one, where logic zero represents the first transmission symbol amplitude and logic one represents the second transmission symbol amplitude, in an embodiment.

The distribution matcher encoder circuitry 200 includes first stage circuitry 204 and second stage circuitry 208. The first stage circuitry 204 (sometimes referred to as the "encoder non-constant composition stage 204" or the "encoder NCC stage 204") is configured to map the vector X to a vector C according to a mapping DM:

$$C = DM(X) \hspace{4cm} \text{Equation 1}$$

The mapping is bijective (i.e., every element of the set of possible values of X maps to a unique element among the set of possible values of C) and is invertible, and thus the vector C can be mapped to the vector according to an inverse mapping $DM^{-1}$:

$$X = DM^{-1}(C) \hspace{4cm} \text{Equation 2}$$

The first stage circuitry 204 is configured to, as part of mapping the vector X to the vector C, generate i) a parameter n1 that indicates a quantity of logic ones in the vector C, and ii) an index X' that identifies a corresponding value of C, amongst a set of possible values of C having n1 ones. In an embodiment, the first stage circuitry 204 is configured to perform the mapping DM using a non-constant composition (NCC) distribution matching encoding technique. The mapping DM is "non-constant" in that the number of logic ones in C can vary depending on the value of X, i.e., X is mapped to C such that the number of logic ones in C is not constant for different values of X. The mapping performed by the first stage circuitry 204 is described in further detail below.

The index X' output by the first stage circuitry 204 has a length of 128 bits, in an embodiment. In other embodiments, the index X' has another suitable length different than 128 bits.

The second stage circuitry 208 (sometimes referred to herein as the "encoder core 208") is configured to perform a recursive constant composition distribution matcher encoding procedure to map, using the parameter n1, the index X' to the vector C, according to an embodiment. For example, the second stage circuitry 208 successively generates, as part of the recursive constant composition distribution matcher encoding procedure, sets of increasingly smaller indexes X' such that each set of indexes X' indicates a respective plurality of subsets of C that together include n1 logic ones, according to an embodiment. The recursive constant composition distribution matcher encoding procedure is "constant" in that, for each sub-stage in the procedure, the number n1 of logic ones in C remains constant.

The second stage circuitry 208 includes a plurality of sub-stages. In the example of Fig. 2, the second stage circuitry 208 includes five sub-stages. In other embodiments, the second stage circuitry 208 includes another suitable number of sub-stages different than five.

A first sub-stage includes division circuitry 220-1-1, which is configured to receive an input index X' and a parameter n1, where n1 indicates the quantity of logic ones in C and X' is an index that selects, from a subset of possible values of C having n1 logic ones, the vector C. The division circuitry 220-1-1 is configured to determine numbers n1' of logic ones in respective subsets of the vector C, where a sum of the numbers n1' equals n1. For instance, in the example of Fig. 2, the division circuitry 220-1-1 is configured to determine i) a number n1a of logic ones in a first half of the vector C (e.g., bits 0-63 of C) and ii) a number n1b of logic ones in a second half of the vector C (e.g., bits 64-127 of C), where n1 = n1a + n1b.

Additionally, the division circuitry 220-1-1 is configured to compute respective indices X" that identify values of subsets of C, amongst respective sets of possible values of the subsets of C having respective n1' ones. For instance, in the example of Fig. 2, the division circuitry 220-1-1 is configured to determine i) an index Xa that identifies a value of the first half of the vector C (e.g., bits 0-63 of C) from amongst a set of possible values of the first half of the vector C having the number n1a of logic ones, and ii) an index Xb that identifies a value of the second half of the vector C (e.g., bits 64-127 of C) from amongst a set of possible values of the second half of the vector C having the number n1b of logic ones.

A second sub-stage includes division circuitry 220-2-1 and division circuitry 220-2-2. The division circuitry 220-2-1 receives the parameter n1a and the index Xa from the first sub-stage, and operates in manner similar to the division circuitry 220-1-1 to determine, based on the parameter n1a and the index Xa, numbers n1' of logic ones in respective subsets of the vector C[0:63], where a sum of the numbers n1' equals n1a. For instance, in the example of Fig. 2, the division circuitry 220-2-1 is configured to determine i) a number nla' of logic ones in a first half of the vector C[0:63] (e.g., bits 0-31) and ii) a number n1b' of logic ones in a second half of the vector C[0:63] (e.g., bits 32-63), where n1a (from the first sub-stage) = nla' + n1b'.

Additionally, the division circuitry 220-2-1 is configured to compute respective indices X" that identify values of subsets of the vector C[0:63], amongst respective sets of possible values of the subsets of C[0:63] having respective n1' ones. For instance, in the example of Fig. 2, the division circuitry 220-2-1 is configured to determine i) an index Xa that identifies a value of the first half of the vector C[0:63] (e.g., bits 0-31) from amongst a set of possible values of the first half of the vector C[0:63] having the number n1a' of logic ones, and ii) an index Xb that identifies a value of the second half of the vector C[0:63] (e.g., bits 32-63) from amongst a set of possible values of the second half of the vector C[0:63] having the number n1b' of logic ones.

Additionally, the division circuitry 220-2-2 receives the parameter n1b and the index Xb from the first sub-stage, and operates in manner similar to the division circuitry 220-1-1 to determine, based on the parameter n1b and the index Xb, numbers n1' of logic ones in respective subsets of the vector C[64:127], where a sum of the numbers n1' equals n1b. For instance, in the example of Fig. 2, the division circuitry 220-2-2 is configured to determine i) a number n1a' of logic ones in a first half of the vector C[64:127] (e.g., bits 64-95) and ii) a number n1b' of logic ones in a second half of the vector C[64:127] (e.g., bits 96-127), where n1b (from the first sub-stage) = n1a' + n1b'.

Additionally, the division circuitry 220-2-2 is configured to compute respective indices X" that identify values of subsets of the vector C[64:127], amongst respective sets of possible values of the subsets of C[64:127] having respective n1' ones. For instance, in the example of Fig. 2, the division circuitry 220-2-2 is configured to determine i) an index Xa that identifies a value of the first half of the vector C[64:127] (e.g., bits 64-95) from amongst a set of possible values of the first half of the vector C[64:127] having the number n1a' of logic ones, and ii) an index Xb that identifies a value of the second half of the vector C[64:127] (e.g., bits 96-127) from amongst a set of possible values of the second half of the vector C[64:127] having the number n1b' of logic ones.

The third sub-stage and the fourth sub-stage also include division circuitry 220 that operate in a similar manner to generate, based on an output of division circuitry in a previous stage, respective parameters n1a and n1b and respective indices Xa and Xb.

The fifth sub-stage includes a plurality of memories 240 that each store a set of possible values of a respective subset of the vector C. For example, a memory 240-1 stores a set of possible values of C[0:7]; a memory 240-2 stores a set of possible values of C[8:15]; a memory 240-3 stores a set of possible values of C[16:23]; and so on.

A value n1a/n1b output by a corresponding division circuitry 220-4 of the fourth sub-stage selects, within the memory 240, a group of possible values of the corresponding subset of the vector C having n1a/n1b logic ones. Additionally, an index Xa/Xb output by the corresponding division circuitry 220-4 of the fourth sub-stage selects a particular value amongst the group of possible values having n1a/n1b logic ones. Thus, each memory 240 is configured to select a memory location using n1a/n1b and the index Xa/Xb output by the corresponding division circuitry 220-4 of the fourth sub-stage, and output the value stored at the selected memory location, in an embodiment.

As can be seen in Fig. 2, each division circuitry 220 receives an input sequence X' of length Nst, and generates two smaller sequences Xa and Xb, each of the smaller sequences Xa and Xb having a length of Nst/2. Additionally, each division circuitry 220 receives a parameter n1 and generates two parameters n1a and n1b, where n1a + n1b = n1.

The distribution matcher encoder circuitry 200 maps uniformly distributed information bits into an output sequence of symbols from an alphabet $\mathcal{A}$, following a desired distribution. In an embodiment, the alphabet $\mathcal{A}$ = {0, 1}. In other embodiments, the alphabet $\mathcal{A}$ comprises another suitable set different than {0,1}.

As discussed above, the distribution matcher encoder circuitry 200 maps an input vector X of K bits to an output vector C of N bits according to a mapping DM (see Equation 1). In the example of Fig. 2, K is 116 and N is 128. In other embodiments, the distribution matcher encoder circuitry 200 operates with a suitable different value of K and/or a suitable different value of N. As discussed above, the mapping DM is invertible, which means X can be recovered from C at a receiver by applying the inverse mapping DM$^{-1}$ (see Equation 2).

The rate R$_{DM}$ of the mapping DM is determined by:

$$R_{DM} = \frac{K}{N} \qquad\qquad \text{Equation 3}$$

As discussed above, each division circuitry 220 receives an input sequence X' of length Nst, the input sequence X' corresponding to a vector C having n1 logic ones, and generates two smaller sequences Xa and Xb that correspond to respective smaller vectors C having n1a and n1b logic ones, respectively, each of the smaller sequences Xa and Xb having a length of Nst/2.

Let $S_{n,i}$ be the number of possible different sequences of length $n$ composed by i bits set to logic one and (n - i) bits to logic zero that each division circuitry 220 receives. The number of words of length 2n with i bits set to logic one is given by:

$$S_{2n,i} = trunc\left(\sum_{\substack{j=0 \\ j \le n, i-j \le n}}^{i} M\big(A_{i,j},\, B_{i,j}, n_{iter}\big), r\right)$$

$$\text{Equation 4}$$

with

$$A_{i,j} := \max\{S_{n,j}, S_{n,i-j}\} \qquad\qquad \text{Equation 5}$$

$$B_{i,j} := \min\{S_{n,j}, S_{n,i-j}\} \qquad\qquad \text{Equation 6}$$

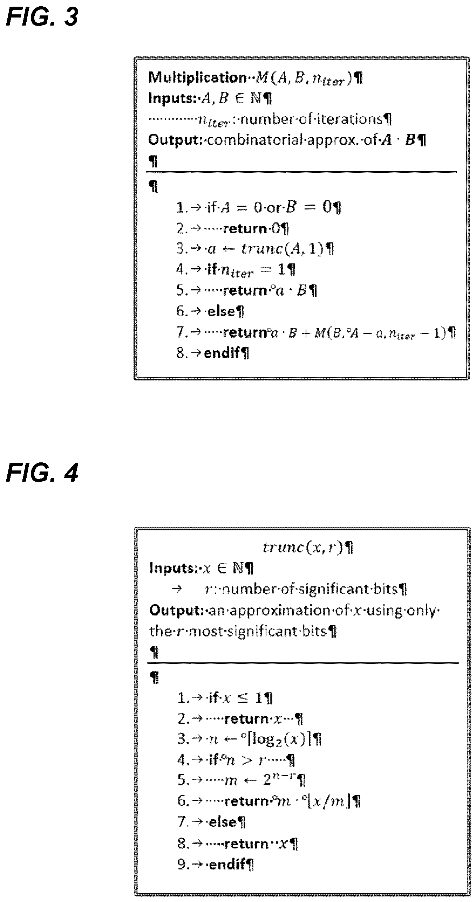

where $M(A, B, n_{iter})$ is a function used to approximate a total number of combinations by doing $n_{iter}$ iterations, and $trunc(\cdot)$ is a truncation function that a number to the $r$ most significant bits. Example pseudocode for implementing the function $M(A, B, n_{iter})$ is illustrated in Fig. 3. In other embodiments, the function $M(A, B, n_{iter})$ is implemented in another suitable manner. Although Fig. 3 refers to the function $M(A, B, n_{iter})$ as a "Multiplication", the function $M(A, B, n_{iter})$ is not a true multiplication in the algebraic sense. As compared to a true multiplication function in the algebraic sense, the function $M(A, B, n_{iter})$ i) can be implemented in hardware with significantly less complexity as compared to true multiplication, ii) preserves combinatorial properties of true multiplication that are necessary for the distribution matcher encoding procedure but does not preserve certain numerical properties of true multiplication that are not necessary for the distribution matcher encoding procedure, and iii) can be executed iteratively up to a necessary coverage level without losing bijectivity at any stage of the iteration.

Example pseudocode for implementing the function $trunc(\cdot)$ is illustrated in Fig. 4. In other embodiments, the function $trunc(\cdot)$ is implemented in another suitable manner. As will be discussed further below, $r$ and $n_{iter}$ are design parameters that affect performance of the distribution matcher encoder circuitry 200.

Let $T_{n,i}$ be the threshold defined by the total number of generated sequences C of length $n$ with at most i bits set to logic one, such as:

$$T_{n,i} = \sum_{j=0}^{i} S_{n,j}$$

Equation 7

with $T_{n,-1} = 0$.

Let $C_i$ be the $i$-th bit of a sequence $C$, and $C_j^k$ the sub-sequence by taking $C_i$ with $j \leq i \leq k$, and let $n_1$ be the number of logic ones in a sequence $C$ of length $n$, and let $n_{1a}, n_{1b}$ denote the number of logic ones located at the lower and higher half of $C$, respectively, such as:

$$n_{1a} = \sum_{i=0}^{n/2-1} C_i$$

Equation 8

$$n_{1b} = \sum_{i=n/2}^{n} C_i$$

Equation 9

$$n_1 = n_{1a} + n_{1b}$$

Equation 10

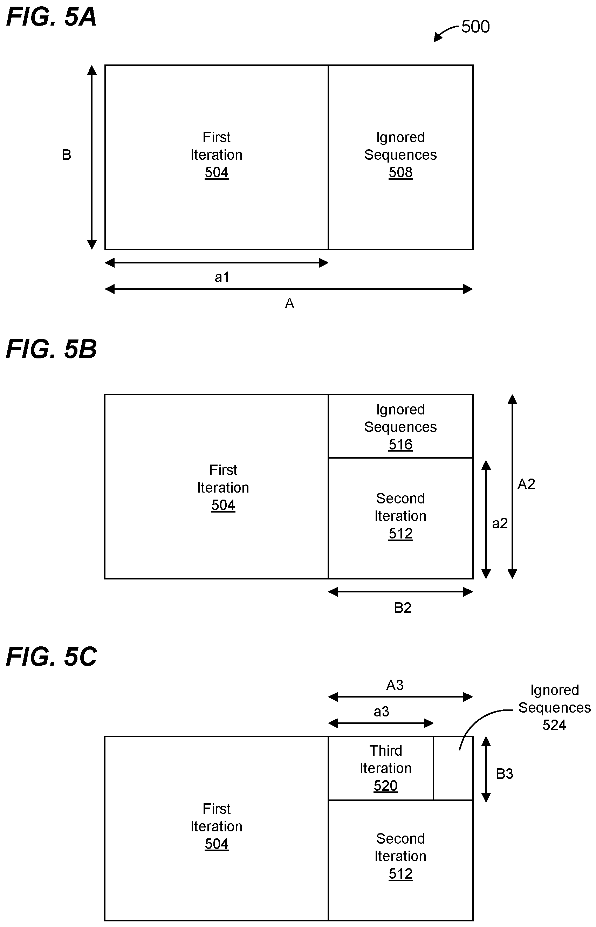

Given the values $A$ and $B$ *(see* Equation 5 and Equation 6), the total number of sequences represented by the product $A \cdot B$ *(see* Fig. 3) depends on the number of iterations used to approximate the product $A \cdot B$ as is shown in the pseudocode of Fig. 3. Figs. 5A-C illustrate the number of sequences represented by the product $A \cdot B$ for different numbers of iterations of the "multiplication" operation illustrated in Fig. 3. In Figs. 5A-C, a set of possible sequences that can be represented by the product $A \cdot B$ for an unlimited number of iterations is represented by the rectangle 500. Fig. 5A illustrates a subset 504 of possible sequences that are represented after one iteration of the product $A \cdot B$, where a set 508 of possible sequences is ignored. In Fig. 5A, the term "a1" is a truncation of A to one most significant bit *(see* Figs. 3 and 4).

Fig. 5B illustrates a subset (a union of subsets 504 and 512) of possible sequences that are represented after two iterations of the product $A \cdot B$, where a set 516 of possible sequences is ignored. For the second iteration, input parameter A is set to the parameter B (shown as A2 in Fig. 5B), and the input parameter B is set to A - a1 (shown as B2 in Fig. 5B). The term "a2" is a truncation of A2 to one most significant bit (see Figs. 3 and 4). The subset 512 corresponds to a subset of the possible sequences of the product $A2 \cdot B2$, where the subset 516 of possible sequences of the product $A2 \cdot B2$ is ignored.

Fig. 5C illustrates a subset (a union of subsets 504, 512, and 520) of possible sequences that are represented after three iterations of the product $A \cdot B$, where a set 524 of possible sequences is ignored. For the third iteration, input parameter A is set to the parameter B2 (shown as A3 in Fig. 5C), and the input parameter B is set to A2 - a2 (shown as B3 in Fig. 5C). The term "a3" is a truncation of A3 to one most significant bit (see Figs. 3 and 4). The subset 520 corresponds to a subset of the possible sequences of the product $A3 \cdot B3$, where the subset 524 of possible sequences of the product $A3 \cdot B3$ is ignored.

In an embodiment, a penalty of selecting particular values for the parameters $r$ and $n_{iter}$ can be represented by:

$$penalty[dB] = 10 \log_{10} \left( \frac{power_{DM}}{power_{ideal}} \right) \qquad \text{Equation 11}$$

where $power_{DM}$ denotes an average power of a constellation generated using the distribution matcher encoder circuitry 200, and $power_{ideal}$ represents an average power of a constellation generated by a distribution matcher encoder with a highest possible rate for a same block length $N$ (for example, $N = 128$ in the example of Fig. 2).

As merely an illustrative example, for a pulse amplitude modulation (PAM) with four levels (PAM4) of $\pm 3$ and $\pm 1$, and where the bits of the generated sequence C are mapped to symbol amplitudes according to $0 \rightarrow 1$ and $1 \rightarrow 3$, then the average power of the constellation can be represented by:

$$power(const) = p_{(0)} \cdot power(1) + p_{(1)} \cdot power(3) \qquad \text{Equation 12}$$

where $power(1)$ and $power(3)$ are the powers of transmission symbols have amplitudes of 1 and 3, respectively, and $p_{(0)}$ and $p_{(1)}$ represent the probabilities of logic zero and logic one, respectively, at an output of the distribution matcher encoder circuitry 200, such as:

$$p_{(1)} = \frac{\sum_{i=0}^{n_1-1} S_{N,i} \cdot i + \left( 2^K - T_{N,n_1-1} \right) \cdot n_1}{N \cdot 2^K} \qquad \text{Equation 13}$$

$$p_{(0)} = 1 - p_{(1)} \qquad \text{Equation 14}$$

where $n_1 \epsilon \mathbb{N}$ is the minimum value which meets the condition:

$$2^K < T_{N,n_1} \qquad \text{Equation 15}$$

On the other hand, for a constellation generated by a distribution matcher encoder with a highest possible rate for a same block length N, the probabilities $p'_{(0)}$ and $p'_{(1)}$ of logic zero and logic one, respectively, at an output of an ideal distribution matcher encoder can be represented as:

$$p'_{(1)} = \frac{\sum_{i=0}^{n'_1-1} \binom{N}{i} \cdot i + \left[ 2^K - \sum_{i=0}^{n'_1-1} \binom{N}{i} \right] \cdot n'_1}{N \cdot 2^K} \qquad \text{Equation 16}$$

$$p'_{(0)} = 1 - p'_{(1)} \qquad \text{Equation 17}$$

where $n'_1 \epsilon \mathbb{N}$ is the minimum value which meets the condition:

$$2^K < \sum_{i=0}^{n'_1} \binom{N}{i} \qquad \text{Equation 18}$$

As merely an illustrative example, the values of $r$ and $n_{iter}$ are selected to provide a penalty (Equation 11) lower than 0.01 dB for a distribution matcher encoder circuitry 200 with a block length of $N = 128$. In such an embodiment, $r = 9$ (the number of significant bits), and $n_{iter}$ depends on the length $N_{st}$ of the words generated in each sub-stage of the encoder core 208, such as:

$$n_{iter} = \begin{cases} 4 & N_{st} = 128 \\ 5 & N_{st} = 64 \\ 6 & otherwise \end{cases} \qquad \text{Equation 19}$$

In other embodiments, other suitable values of the penalty (see Equation 11), r, and/or $n_{iter}$ are utilized.

Referring again to Fig. 2, the encoder NCC stage 204 receives a set X of information bits and, using X, generates i) a value $n_1$, which specifies a quantity of logic ones in the output sequence C, and ii) an index X', which identifies a particular sequence C from the possible sequences C having $n_1$ logic ones. In an embodiment, a set of all possible represented sequences C can be considered to be arranged in an order from a lowest number of logic ones to a highest number of logic ones. The value $n_1$, which specifies a quantity of logic ones in the output sequence C, corresponds to an offset into the ordering of sequences C, and the index X' is an index into the ordering of sequences C starting from the offset $n_1$, according to an embodiment.

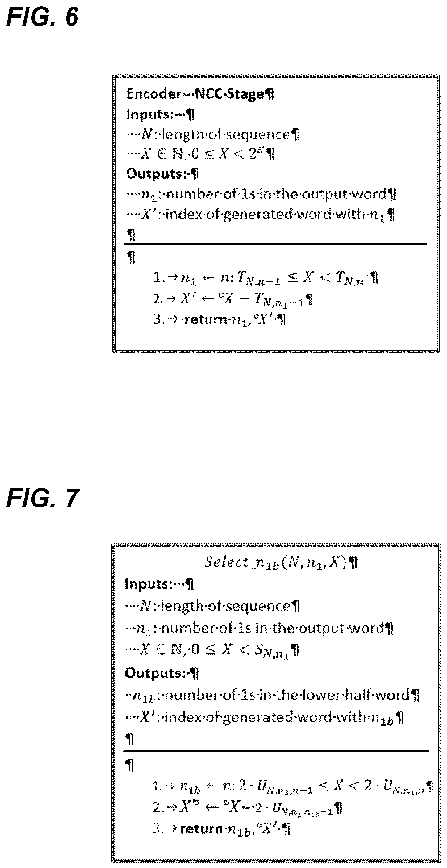

Example pseudocode for implementing the encoder NCC stage 204 is illustrated in Fig. 6. In other embodiments, the encoder NCC stage 204 is implemented in another suitable manner.

As discussed above, each division circuitry 220 receives an input sequence X' of length Nst, and generates two smaller sequences Xa and Xb that indicate respective sequences of amplitude indicators having n1a and n1b logic ones, respectively, each of the smaller sequences Xa and Xb having a length of Nst/2. In other words, each division circuitry 220 selects a tuple ($n_{1a}$, $n_{1b}$) and computes the values ($X_a$, $X_b$) to define the two new sub-sequences based on the initial $n_1$ and X values.

Example pseudocode for implementing a function Select_n1b is illustrated in Fig. 7. The function Select_n1b determines the number of logic ones n1b in the smaller sequence Xb based on an input sequence X and a parameter n1, i.e., the number of logic ones in the input sequence X. The number of logic ones n1a in the smaller sequence Xa can then be determined as n1a = n1 - n1b. In other embodiments, the division circuitry 220 determines the tuple ($n_{1a}$, $n_{1b}$) in another suitable manner.

In Fig. 7, $U_{n,i,j}$ is a total number of generated sequences C of length n with i logic ones, and with at most j bits in $C_{n/2}^n$ set to logic one, where $U_{n,i,-1}$ = 0.

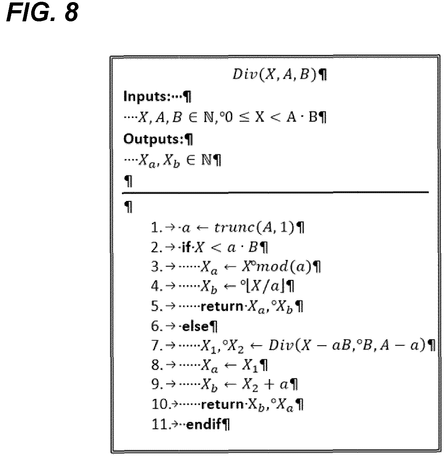

Example pseudocode for implementing a function Div is illustrated in Fig. 8. The function Div determines generates, based on the input sequence X', two smaller sequences Xa and Xb as discussed above, each of the smaller sequences Xa and Xb having a length of Nst/2, where Nst is the length of the input sequence X'. The function Div is performed in a finite number of iterations. In other embodiments, the division circuitry 220 generates the smaller sequences Xa and Xb in another suitable manner.

In the Div function of Fig. 8, the operation:

$$X_b \leftarrow \lfloor X/a \rfloor \qquad \text{Equation 20}$$

can be performed with significantly less complexity as compared to true division because the divisor a is a truncated version of A.

As discussed above, the fifth sub-stage of the encoder core 208 includes the memories 240 that store possible values of respective subsets of the vector C, each subset consisting of L bits, in an embodiment. For example, L = 8 and the memory 240-1 stores a set of possible values of C[0:7]; the memory 240-2 stores a set of possible values of C[8:15]; the memory 240-3 stores a set of possible values of C[16:23]; and so on. Thus, each memory 240 stores sequences of L bits.

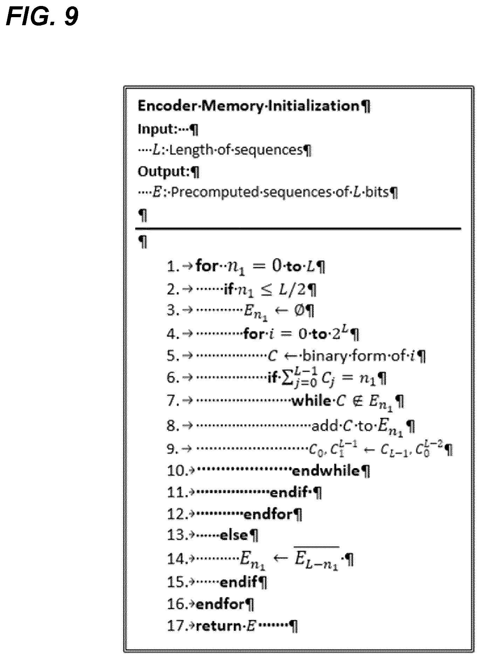

Example pseudocode for generating sequences to be stored in the memories 240 is illustrated in Fig. 9. In Fig. 9, E denotes a set of all precomputed sequences, and $E_n \subseteq E$ is a subset of sequences with only n bits set to logic one. The notation $\overline{E_n}$ indicates a set obtained by flipping all bits from each sequence in $E_n$.

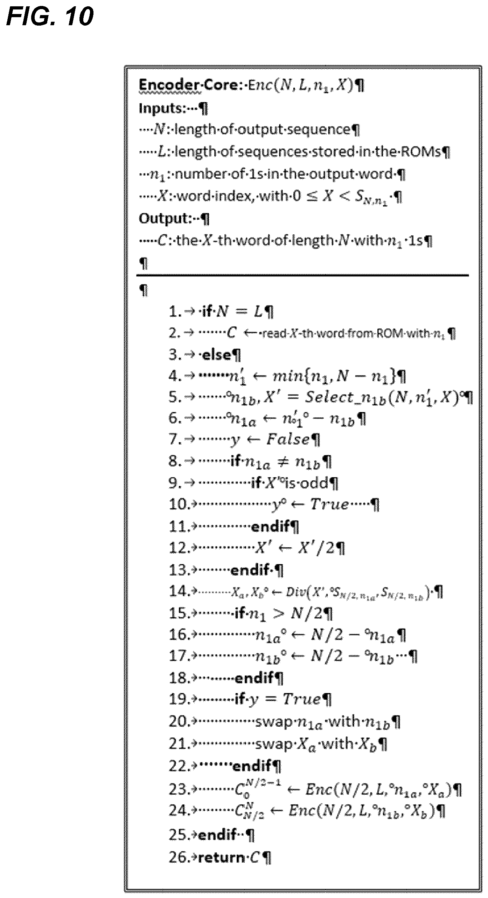

As discussed above, the encoder core 208 is implemented in a recursive manner. For example, at each of the sub-stages of the encoder core 208, i) two sub-sequences ($X_a$, $X_b$) each of length N/2 are generated from a sequence X' of length N; and ii) a tuple ($n_{1a}$, $n_{1b}$) is generated from the input $n_1$. Example pseudocode describing the operation of the encoder core 208 is illustrated in Fig. 10. In other embodiments, the encoder core 208 operates in another suitable manner.

Referring again to Fig. 2, the encoder NCC stage 204 is implemented using hardware circuitry configured to perform operations of the encoder NCC stage 204 such as described herein, according to an embodiment. In another embodiment, the encoder NCC stage 204 is additionally or alternatively implemented using a processor that executes machine-readable instructions stored in a memory coupled to the processor. The machine-readable instructions, when executed by the processor, cause the processor to perform operations of the encoder NCC stage 204 such as described herein, according to an embodiment.

Each division circuitry 220 is implemented using hardware circuitry configured to perform operations of the division circuitry 220 such as described herein, according to an embodiment. In another embodiment, each division circuitry 220 is additionally or alternatively implemented using a processor that executes machine-readable instructions stored in a memory coupled to the processor. The machine-readable instructions, when executed by the processor, cause the processor to perform operations of the division circuitry 220 such as described herein, according to an embodiment.

Although the division circuitry 220 is illustrated in Fig. 2 as separate blocks, in some embodiments a same set of physical circuitry is reused (e.g., using time sharing) to implement multiple sets of the division circuitry 220 is illustrated in Fig. 2.

The memories 240 comprise read-only memories (ROMs) in an embodiment. The memories 240 comprise other suitable memories such as solid-state memories, random access memories (RAMs), etc., in other embodiments.

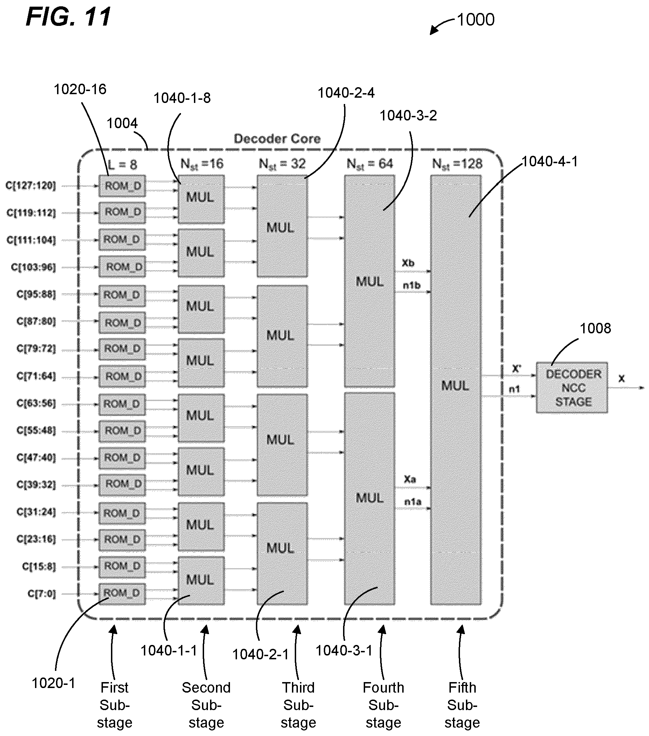

Fig. 11 is a simplified block diagram of distribution matcher decoder circuitry 1000, according to an embodiment. The distribution matcher decoder circuitry 1000 is included in the distribution matcher decoder circuitry 164 of Fig. 1, according to an embodiment, and Fig. 11 is described with reference to Fig. 1 for ease of explanation. The distribution matcher decoder circuitry 164 has another suitable structure different than the distribution matcher decoder circuitry 1000, in another embodiment. Additionally, the distribution matcher decoder circuitry 1000 is included in another suitable transceiver different than the transceiver 100 of Fig. 1, in another embodiment.

The distribution matcher decoder circuitry 1000 is configured to perform a recursive constant composition distribution matcher decoding procedure to map a sequence of amplitude indicators that corresponds to amplitudes of transmission symbols in a set of transmission symbols received by the transceiver 100 to a sequence of information bits, according to an embodiment. For example, the distribution matcher decoder circuitry 1000 determines the quantity n1 for a set of transmission symbols received by the transceiver 100, and the recursive constant composition distribution matcher decoding procedure successively generates, using n1, sets of increasingly larger sequences such that each set of sequences indicates n1 transmission symbols having the particular transmission symbol amplitude value, according to an embodiment.

In Fig. 11, a vector C corresponds to a set of transmission symbol amplitudes corresponding to a set of transmission symbols received by the transceiver 100, and a vector X corresponds to a set of information bits decoded from the vector C. In an illustrative embodiment, the vector X has a length of 116 and the vector C has a length of 128. Thus, the distribution matcher decoder circuitry 1000 maps a set of 128 amplitudes corresponding to a set of 128 transmission symbols to a set of 116 information bits. In other embodiments, the vector X has another suitable length different than 116 and/or the vector C has another suitable length different than 128.

The distribution matcher decoder circuitry 1000 is configured to operate in a transceiver configured to receive transmission symbols that can have one of two amplitudes, i.e., one of a first transmission symbol amplitude and a second transmission symbol amplitude, where the second transmission symbol amplitude is greater than the first transmission symbol amplitude. With such a transceiver, the second transmission symbol amplitude corresponds to a maximum transmission symbol amplitude.

Each element of the vector C can have one of two logic values, e.g., one of logic zero and logic one, where logic zero represents the first transmission symbol amplitude and logic one represents the second transmission symbol amplitude, in an embodiment.

The distribution matcher decoder circuitry 1000 includes first stage circuitry 1004 and second stage circuitry 1008. The first stage circuitry 1004 (sometimes referred to herein as the "decoder core 1004") is configured to perform a recursive constant composition distribution matcher decoding procedure to map, using a parameter n1, the vector C to an index X', where n1 is a quantity of logic ones in the vector C, according to an embodiment. For example, the first stage circuitry 1004 successively generates, as part of the recursive constant composition distribution matcher decoding procedure, sets of increasingly larger indexes X' such that each set of indexes X' indicates a respective plurality of subsets of C that together include n1 logic ones, according to an embodiment. The recursive constant composition distribution matcher decoding procedure is "constant" in that, for each sub-stage in the procedure, the number n1 of logic ones in C remains constant.

The second stage circuitry 1008 (sometimes referred to as the "decoder non-constant composition stage 1008" or the "decoder NCC stage 1008") is configured to map the vector C to the vector X according to the inverse mapping $DM^{-1}$ (Equation 2).

The second stage circuitry 1008 is configured to, as part of mapping the vector C to the vector X, receive i) a parameter n1 that indicates a quantity of logic ones in the vector C, and ii) an index X' that identifies a corresponding value of C, amongst a set of possible values of C having n1 ones. The parameter x1 and the index X' are output by the first stage circuitry 1004, as will be described below.

In an embodiment, the second stage circuitry 1008 is configured to perform the inverse mapping $DM^{-1}$ using an NCC distribution matching decoding technique. The inverse mapping $DM^{-1}$ is "non-constant" in that the number of logic ones in C varies, i.e., the number of logic ones is not constant. The mapping performed by the second stage circuitry 1008 is described in further detail below.

The index X' output by the first stage circuitry 1004 has a length of 128 bits, in an embodiment. In other embodiments, the index X' has another suitable length different than 128 bits.

The first stage circuitry 1004 includes a plurality of sub-stages. In the example of Fig. 11, the second stage circuitry 208 includes five sub-stages. In other embodiments, the first stage circuitry 1004 includes another suitable number of sub-stages different than five.

A first sub-stage includes a plurality of memories 1020 that each store a set of possible values of a vector X' corresponding to a respective subset of the vector C. For example, a memory 1020-1 stores a set of possible values of a vector X' for C[0:7]; a memory 1020-2 stores a set of possible values of a vector X' for C[8:15]; a memory 1020-3 stores a set of possible values of a vector X' for C[16:23]; and so on. Each memory 1020 also outputs a value n1a/n1b, which indicates a quantity of logic ones in the respective subset of the vector C.

In an embodiment, each memory 1020 stores a plurality of tuples (Xa/Xb, n1a/n1b), and the respective subset of the vector C is used as an index to select one of the tuples. In another embodiment, each memory 1020 stores a plurality of values of Xa/Xb, and the respective subset of the vector C is used as an index to select one of the values of Xa/Xb; and the memory 1020 includes circuitry to determine and output the quantity n1a/n1b of logic ones.

A first sub-stage includes multiplication circuitry 1040-1-1 through 1040-1-8, and each multiplication circuitry 1040-1 is configured to receive, from a respective pair of memories 1020, an index Xa, an index Xb, a parameter n1a, and a parameter n1b. The multiplication circuitry 1040-1 is configured to generate a larger index X' from Xa and Xb, the larger index corresponding to a larger subset of the vector C. Additionally, the multiplication circuitry 1040-1 is configured to generate a number n1 of logic ones in the larger subset of the vector C, where a sum of the n1a and n1b equals n1. For instance, in the example of Fig. 11, the multiplication circuitry 1040-1-1 is configured to determine i) a number n1 of logic ones in the vector C[0:15], and ii) an index X' corresponding to the vector C[0:15]. X' output by the multiplication circuitry 1040-1-1 identifies the value of the vector C[0:15], amongst respective sets of possible values of the vector C[0:15] having n1' logic ones.

A second sub-stage includes multiplication circuitry 1040-2-1 through 1040-2-4, and each multiplication circuitry 1040-2 is configured to receive, from a respective pair of multiplication circuitries 1040-1 in the first stage, an index Xa, an index Xb, a parameter n1a, and a parameter n1b. The multiplication circuitry 1040-2 is configured to generate a larger index X' from Xa and Xb, the larger index corresponding to a larger subset of the vector C. Additionally, the multiplication circuitry 1040-2 is configured to generate a number n1 of logic ones in the larger subset of the vector C, where a sum of the n1a and n1b equals n1. For instance, in the example of Fig. 11, the multiplication circuitry 1040-2-1 is configured to determine i) a number n1 of logic ones in the vector C[0:31], and ii) an index X' corresponding to the vector C[0:31]. X' output by the multiplication circuitry 1040-2-1 identifies the value of the vector C[0:31], amongst respective sets of possible values of the vector C[0:31] having n1' logic ones.

The third sub-stage and the fourth sub-stage also include multiplication circuitry 1040 that operate in a similar manner to generate, based on outputs of respective multiplication circuitries in a previous stage, respective parameters n1a and n1b and respective indices Xa and Xb.

The fifth sub-stage includes multiplication circuitry 1040-4-1 that operate in a similar manner to generate, based on outputs of respective multiplication circuitries in the fourth sub-stage, respective parameters n1a and n1b and respective indices Xa and Xb. The multiplication circuitry 1040-4 generates an index X' from Xa and Xb, the index X' having a length of 128 and corresponding to the vector C[0:127]. Additionally, the multiplication circuitry 1040-4-1 is configured to generate a number n1 of logic ones in the larger subset of the vector C[0:127], where a sum of the n1a and n1b equals n1, which is the number n1 of logic ones in the vector C[0:127].

As can be seen in Fig. 11, each multiplication circuitry 1040 receives input sequences Xa and Xb, each of length Nst, and generates a larger sequence X' having a length of 2*Nst. Additionally, each multiplication circuitry 1040 receives input sequences n1a and n1b and outputs a parameter n1 = n1a + n1b. In other words, each multiplication circuitry 1040 generates a larger vector X' and a parameter $n_1$ based on a tuple ($n_{1a}$, $n_{1b}$) and the vectors ($X_a$, $X_b$).

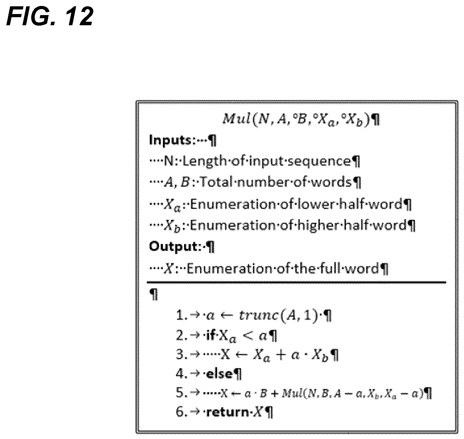

Example pseudocode for implementing a *function Mul* is illustrated in Fig. 12. The function *Mul* generates, based on the input sequences *Xa* and *Xb* that come from a previous sub-stage, a larger sequence X as discussed above, where each of the smaller sequences *Xa* and *Xb* has a length of N/2, and where the output sequence X has length of N. Inputs to the function *Mul* include *Xa, Xb, A* (which is a number of possible sequences of length N/2 having n1a logic ones), B (which is a number of possible sequences of length N/2 having n1b logic ones), and N. The function *Mul* is implemented recursively in a finite number of iterations. In other embodiments, the multiplication circuitry 1040 generates the larger sequence X based on Xa and Xb in another suitable manner.

The decoder core 1004 splits a received vector C in subsets of L bits, and each subset of L bits is used to read an initial index stored in a respective memory 1020. Given a sub-sequence C' of length L with n bits set to 1, this index refers to the location of C' into the set $E_n$ defined in the DM Encoder Core, starting from 0 to $\binom{L}{n} - 1$. Then those indexes are combined in pairs ($X_a$, $X_b$) to find an index X corresponding to the enumeration of a word having twice the length.

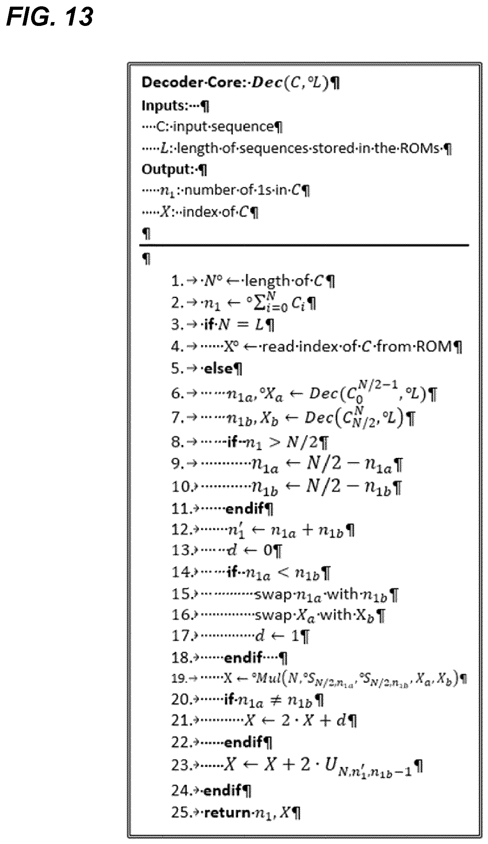

Example pseudocode describing the operation of the decoder core 1004 is illustrated in Fig. 13. In other embodiments, the decoder core 1004 operates in another suitable manner.

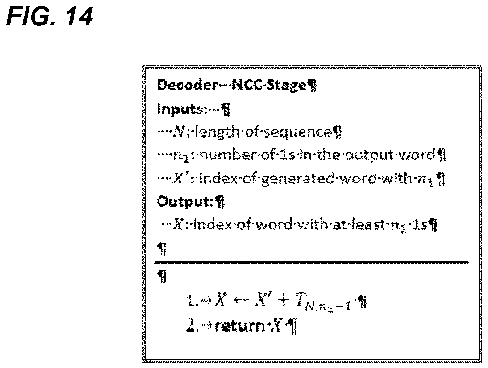

The decoder NCC stage 1008 receives from the decoder core 1004 i) a parameter n1 that indicates a quantity of logic ones in the vector C, and ii) an index X' that identifies a corresponding value of C, amongst a set of possible values of C having n1 ones. Example pseudocode describing the operation of the decoder NCC stage 1008 is illustrated in Fig. 14. In other embodiments, the decoder NCC stage 1008 operates in another suitable manner.

Referring again to Fig. 11, the decoder NCC stage 1008 is implemented using hardware circuitry configured to perform operations of the decoder NCC stage 1008 such as described herein, according to an embodiment. In another embodiment, the decoder NCC stage 1008 is additionally or alternatively implemented using a processor that executes machine-readable instructions stored in a memory coupled to the processor. The machine-readable instructions, when executed by the processor, cause the processor to perform operations of the decoder NCC stage 1008 such as described herein, according to an embodiment.

Each multiplication circuitry 1040 is implemented using hardware circuitry configured to perform operations of the multiplication circuitry 1040 such as described herein, according to an embodiment. In another embodiment, each multiplication circuitry 1040 is additionally or alternatively implemented using a processor that executes machine-readable instructions stored in a memory coupled to the processor. The machine-readable instructions, when executed by the processor, cause the processor to perform operations of the multiplication circuitry 1040 such as described herein, according to an embodiment.

Although the multiplication circuitry 1040 is illustrated in Fig. 11 as separate blocks, in some embodiments a same set of physical circuitry is reused (e.g., using time sharing) to implement multiple sets of the multiplication circuitry 1040 is illustrated in Fig. 11.

The memories 1020 comprise ROMs in an embodiment. The memories 1020 comprise other suitable memories such as solid-state memories, RAMs, etc., in other embodiments.

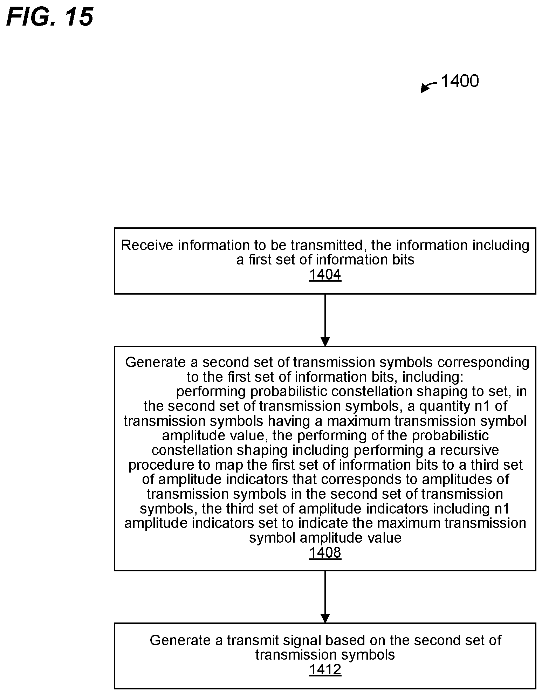

Fig. 15 is a flow diagram of an example method 1400 for transmitting information in a communication system using probabilistic constellation shaping, according to an embodiment. The method 1400 is implemented by the transceiver 100 of Fig. 1 and/or the distribution matcher encoder circuitry 200 of Fig. 2, according to some embodiments, and the method 1400 is described with reference to Figs. 1 and 2 for ease of explanation. In other embodiments, the method 1400 is implemented by another suitable transceiver different than the transceiver 100 and/or by other suitable distribution matcher encoder circuitry different than the distribution matcher encoder circuitry 200.

At block 1404, information to be transmitted is received by processing circuitry of a transceiver, the information circuitry including a first set of information bits. For example, the processing circuitry 104 receives information to be transmitted. As another example, the distribution matcher encoder circuitry 160/200 receives information to be transmitted.

At block 1408, the processing circuitry generates a second set of transmission symbols corresponding to the first set of information bits. For example, the processing circuitry 104 generates the second set of transmission symbols. As another example, the distribution matcher encoder circuitry 160/200 generates the second set of transmission symbols. Generating the second set of transmission symbols at block 1408 includes performing probabilistic constellation shaping to set, in the second set of transmission symbols, a quantity n1 of transmission symbols having a maximum transmission symbol amplitude value. Performing probabilistic constellation shaping includes performing a recursive distribution matcher procedure to map the first set of information bits to a third set of amplitude indicators that corresponds to amplitudes of transmission symbols in the second set of transmission symbols, the third set of amplitude indicators including n1 amplitude indicators set to indicate the maximum transmission symbol amplitude value.

At block 1412, the transceiver generates a transmit signal based on the second set of transmission symbols. For example, the optical transceiver 108 generates the transmit signal.

In an embodiment, performing the recursive procedure at block 1408 to map the first set of information bits to the third set of amplitude indicators comprises: performing a recursive constant composition distribution matcher procedure to map the first set of information bits to the third set of amplitude indicators.

In another embodiment, performing probabilistic constellation shaping at block 1408 further comprises: determining, by the processing circuitry, the quantity n1 of transmission symbols having the maximum transmission symbol amplitude value based on the first set of information bits.

In another embodiment, determining the quantity n1 of transmission symbols having the maximum transmission symbol amplitude value comprises: performing, by the processing circuitry, a non-constant composition distribution matcher procedure to determine the quantity n1 of transmission symbols having the maximum transmission symbol amplitude value based on the first set of information bits.

In another embodiment, performing probabilistic constellation shaping further comprises: generating an index X' based on the first set of information bits, the index X' specifying the third set of amplitude indicators from amongst a group of potential third sets having n1 bits set to indicate the maximum transmission symbol amplitude value; and wherein performing the recursive distribution matcher procedure comprises performing a recursive constant composition distribution matcher procedure, using the value n1, to map X' to the third set of amplitude indicators.

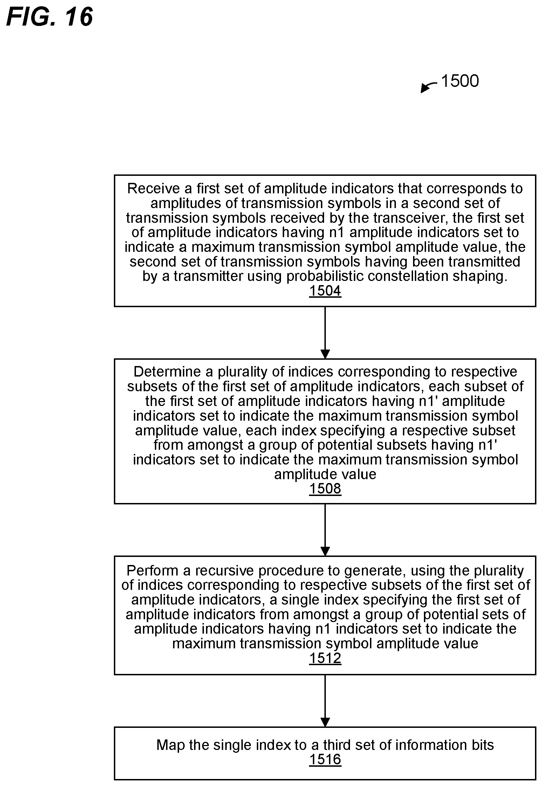

Fig. 16 is a flow diagram of an example method 1500 for decoding a received signal in a communication system, according to another embodiment. The method 1500 is implemented by the transceiver 100 of Fig. 1 and/or the distribution matcher decoder circuitry 1000 of Fig. 11, according to some embodiments, and the method 1500 is described with reference to Figs. 1 and 11 for ease of explanation. In other embodiments, the method 1500 is implemented by another suitable transceiver different than the transceiver 100 and/or by other suitable distribution matcher decoder circuitry different than the distribution matcher decoder circuitry 1000.

At block 1504, processing circuitry of a transceiver receives a first set of amplitude indicators that corresponds to amplitudes of transmission symbols in a second set of transmission symbols received by the transceiver. The first set of amplitude indicators includes n1 amplitude indicators set to indicate a maximum transmission symbol amplitude value, the second set of transmission symbols having been transmitted by a transmitter using probabilistic constellation shaping, according to an embodiment. For example, the processing circuitry 104 receives the first set of amplitude indicators. As another example, the distribution matcher decoder circuitry 164/1000 receives the first set of amplitude indicators.

At block 1508, the processing circuitry determines a plurality of indices corresponding to respective subsets of the first set of amplitude indicators, each subset of the first set of amplitude indicators having n1' amplitude indicators set to indicate the maximum transmission symbol amplitude value, each index specifying a respective subset from amongst a group of potential subsets having n1' indicators set to indicate the maximum transmission symbol amplitude value. For example, the processing circuitry 104 determines the plurality of indices. As another example, the distribution matcher decoder circuitry 164/1000 determines the plurality of indices.

At block 1512, the processing circuitry performs a recursive procedure to generate, using the plurality of indices corresponding to respective subsets of the first set of amplitude indicators, a single index specifying the first set of amplitude indicators from amongst a group of potential sets of amplitude indicators having n1 indicators set to indicate the maximum transmission symbol amplitude value. For example, the processing circuitry 104 performs the recursive procedure. As another example, the distribution matcher decoder circuitry 164/1000 performs the recursive procedure. As another example, the decoder core 1004 performs the recursive procedure.

At block 1516, the processing circuitry maps the single index to a third set of information bits. For example, the processing circuitry 104 maps the single index to the third set of information bits. As another example, the distribution matcher decoder circuitry 164/1000 maps the single index to the third set of information bits. As another example, the decoder NCC stage 1008 maps the single index to the third set of information bits.

In another embodiment, performing the recursive procedure at block 1512 comprises: successively generating larger indices based on the plurality of indices to generate the single index.

In another embodiment, performing the recursive procedure at block 1512 comprises performing a recursive constant composition distribution matcher procedure to generate the single index.

In another embodiment, mapping the single index to the third set of information bits at block 1516 comprises: mapping the single index to the third set of information bits using n1.

In another embodiment, mapping the single index to the third set of information bits at block 1516 comprises: performing, by the processing circuitry, a non-constant composition distribution matching operation, using n1, the single index to the third set of information bits.

Embodiment 1: A transceiver, comprising processing circuitry. The processing circuitry is configured to: receive information to be transmitted via one or more optical communication media, the information including a first set of information bits; generate a second set of transmission symbols corresponding to the first set of information bits. The generation of the second set of transmission symbols includes: performing probabilistic constellation shaping to set, in the second set of transmission symbols, a quantity n1 of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including n1 amplitude indicators set to indicate the maximum transmission symbol amplitude value. The processing circuitry is further configured to generate one or more drive signals based on the second set of transmission symbols. The transceiver also comprises an optical transceiver configured to generate one or more optical transmit signals based on the one or more drive signals.

Embodiment 2: The transceiver of embodiment 1, wherein the processing circuitry is further configured to, as part of performing the recursive procedure: perform a recursive constant composition distribution matching procedure to map the first set of information bits to the third set of amplitude indicators.

Embodiment 3: The transceiver of either of embodiments 1 or 2, wherein the processing circuitry is further configured to: determine the quantity n1 of transmission symbols having the maximum transmission symbol amplitude value based on the first set of information bits.

Embodiment 4: The transceiver of embodiment 3, wherein the processing circuitry is further configured to: perform a non-constant composition distribution matching procedure to determine the quantity n1 of transmission symbols having the maximum transmission symbol amplitude value based on the first set of information bits.

Embodiment 5: The transceiver of embodiment 4, wherein the processing circuitry is further configured to:

generate an index X' based on the first set of information bits, the index X' specifying the third set of amplitude indicators from amongst a group of potential third sets having n1 bits set to indicate the maximum transmission symbol amplitude value; and perform a recursive constant composition distribution matching procedure, using the value n1, to map X' to the third set of amplitude indicators.

Embodiment 6: A method for transmitting information in a communication system, the method comprising: receiving, at a processing circuitry of a transceiver, information to be transmitted, the information including a first set of information bits; and generating, by the processing circuitry, a second set of transmission symbols corresponding to the first set of information bits. Generating the second set of transmission symbols includes: performing probabilistic constellation shaping to set, in the second set of transmission symbols, a quantity n1 of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including n1 amplitude indicators set to indicate the maximum transmission symbol amplitude value. The method also includes generating, by the transceiver, a transmit signal based on the second set of transmission symbols.

Embodiment 7: The method for transmitting information of embodiment 6, wherein performing the recursive procedure to map the first set of information bits to the third set of amplitude indicators comprises: performing a recursive constant composition distribution matching procedure to map the first set of information bits to the third set of amplitude indicators.

Embodiment 8: The method for transmitting information of either of embodiments 6 or 7, wherein performing probabilistic constellation shaping further comprises: determining, by the processing circuitry, the quantity n1 of transmission symbols having the maximum transmission symbol amplitude value based on the first set of information bits.

Embodiment 9: The method for transmitting information of embodiment 8, wherein determining the quantity n1 of transmission symbols having the maximum transmission symbol amplitude value comprises: performing, by the processing circuitry, a non-constant composition distribution matching procedure to determine the quantity n1 of transmission symbols having the maximum transmission symbol amplitude value based on the first set of information bits.

Embodiment 10: The method for transmitting information of embodiment 9, wherein performing probabilistic constellation shaping further comprises: generating an index X' based on the first set of information bits, the index X' specifying the third set of amplitude indicators from amongst a group of potential third sets having n1 bits set to indicate the maximum transmission symbol amplitude value; and wherein performing the recursive distribution matching procedure comprises performing a recursive constant composition distribution matching procedure, using the value n1, to map X' to the third set of amplitude indicators.

Embodiment 11: A method for decoding a received signal in a communication system, the method comprising: receiving, at processing circuitry of a transceiver, a first set of amplitude indicators that corresponds to amplitudes of transmission symbols in a second set of transmission symbols received by the transceiver, the first set of amplitude indicators having n1 amplitude indicators set to indicate a maximum transmission symbol amplitude value, the second set of transmission symbols having been transmitted by a transmitter using probabilistic constellation shaping; determining, by the processing circuitry, a plurality of indices corresponding to respective subsets of the first set of amplitude indicators, each subset of the first set of amplitude indicators having n1' amplitude indicators set to indicate the maximum transmission symbol amplitude value, each index specifying a respective subset from amongst a group of potential subsets having n1' indicators set to indicate the maximum transmission symbol amplitude value; performing, by the processing circuitry, a recursive procedure to generate, using the plurality of indices corresponding to respective subsets of the first set of amplitude indicators, a single index specifying the first set of amplitude indicators from amongst a group of potential sets of amplitude indicators having n1 indicators set to indicate the maximum transmission symbol amplitude value; and mapping, by the processing circuitry, the single index to a third set of information bits.

Embodiment 12: The method for decoding the received signal of embodiment 11, wherein performing the recursive procedure comprises: performing a recursive constant composition distribution matching procedure to generate the single index.

Embodiment 13: The method for decoding the received signal of either of embodiments 11 or 12, wherein mapping, the single index to the third set of information bits comprises: mapping the single index to the third set of information bits using n1.

Embodiment 14: The method for decoding the received signal of embodiment 13, wherein mapping, the single index to the third set of information bits comprises: performing, by the processing circuitry, a non-constant composition distribution matching operation, using n1, the single index to the third set of information bits.

Embodiment 15: The method for decoding the received signal of embodiment 14, performing the recursive procedure comprises: successively generating larger indices based on the plurality of indices to generate the single index.

Embodiment 16: A transceiver, comprising: an optical transceiver configured to receive one or more optical signals, the one or more optical signals having been transmitted by a transmitter using probabilistic constellation shaping; and processing circuitry. The processing circuitry is configured to: receive a first set of amplitude indicators that corresponds to amplitudes of transmission symbols in the one or more optical signals, the first set of amplitude indicators having n1 amplitude indicators set to indicate a maximum transmission symbol amplitude value; determine a plurality of indices corresponding to respective subsets of the first set of amplitude indicators, each subset of the first set of amplitude indicators having n1' amplitude indicators set to indicate the maximum transmission symbol amplitude value, each index specifying a respective subset from amongst a group of potential subsets having n1' indicators set to indicate the maximum transmission symbol amplitude value; perform a recursive procedure to generate, using the plurality of indices corresponding to respective subsets of the first set of amplitude indicators, a single index specifying the first set of amplitude indicators from amongst a group of potential sets of amplitude indicators having n1 indicators set to indicate the maximum transmission symbol amplitude value; and map the single index to a second set of information bits.

Embodiment 17: The transceiver of embodiment 16, wherein the processing circuitry is configured to: perform a recursive constant composition distribution matching procedure to generate the single index.

Embodiment 18: The transceiver of either of embodiments 16 or 17, wherein the processing circuitry is configured to: map the single index to the third set of information bits using n1.

Embodiment 19: The transceiver of embodiment 18, wherein the processing circuitry is configured to: perform a non-constant composition distribution matching operation, using n1, the single index to the third set of information bits.

Embodiment 20: The transceiver of embodiment 19, wherein the processing circuitry is configured to: successively generate larger indices based on the plurality of indices to generate the single index.

Embodiment 21: An apparatus, comprising processing circuitry. The processing circuitry is configured to: receive information to be transmitted via one or more optical communication media, the information including a first set of information bits; generate a second set of transmission symbols corresponding to the first set of information bits. The generation of the second set of transmission symbols includes: performing probabilistic constellation shaping to set, in the second set of transmission symbols, a quantity n1 of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including n1 amplitude indicators set to indicate the maximum transmission symbol amplitude value.

Embodiment 22: The apparatus of embodiment 21, wherein the processing circuitry is further configured to, as part of performing the recursive procedure: perform a recursive constant composition distribution matching procedure to map the first set of information bits to the third set of amplitude indicators.

Embodiment 23: The apparatus of either of embodiments 21 or 22, wherein the processing circuitry is further configured to: determine the quantity n1 of transmission symbols having the maximum transmission symbol amplitude value based on the first set of information bits.

Embodiment 24: The apparatus of embodiment 23, wherein the processing circuitry is further configured to: perform a non-constant composition distribution matching procedure to determine the quantity n1 of transmission symbols having the maximum transmission symbol amplitude value based on the first set of information bits.

Embodiment 25: The apparatus of embodiment 24, wherein the processing circuitry is further configured to: generate an index X' based on the first set of information bits, the index X' specifying the third set of amplitude indicators from amongst a group of potential third sets having n1 bits set to indicate the maximum transmission symbol amplitude value; and perform a recursive constant composition distribution matching procedure, using the value n1, to map X' to the third set of amplitude indicators.

Embodiment 26: A method for generating a communication signal, the method comprising: receiving, at a processing circuitry, information to be transmitted, the information including a first set of information bits; and generating, by the processing circuitry, a second set of transmission symbols corresponding to the first set of information bits. Generating the second set of transmission symbols includes: performing probabilistic constellation shaping to set, in the second set of transmission symbols, a quantity n1 of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including n1 amplitude indicators set to indicate the maximum transmission symbol amplitude value.

Embodiment 27: The method of embodiment 26, wherein performing the recursive procedure to map the first set of information bits to the third set of amplitude indicators comprises: performing a recursive constant composition distribution matching procedure to map the first set of information bits to the third set of amplitude indicators.

Embodiment 28: The method of either of embodiments 26 or 27, wherein performing probabilistic constellation shaping further comprises: determining, by the processing circuitry, the quantity n1 of transmission symbols having the maximum transmission symbol amplitude value based on the first set of information bits.

Embodiment 29: The method of embodiment 28, wherein determining the quantity n1 of transmission symbols having the maximum transmission symbol amplitude value comprises: performing, by the processing circuitry, a non-constant composition distribution matching procedure to determine the quantity n1 of transmission symbols having the maximum transmission symbol amplitude value based on the first set of information bits.

Embodiment 30: The method of embodiment 29, wherein performing probabilistic constellation shaping further comprises: generating an index X' based on the first set of information bits, the index X' specifying the third set of amplitude indicators from amongst a group of potential third sets having n1 bits set to indicate the maximum transmission symbol amplitude value; and wherein performing the recursive distribution matching procedure comprises performing a recursive constant composition distribution matching procedure, using the value n1, to map X' to the third set of amplitude indicators.

Embodiment 31: An apparatus, comprising processing circuitry. The processing circuitry is configured to: receive a first set of amplitude indicators that corresponds to amplitudes of transmission symbols received via one or more communication media, the first set of amplitude indicators having n1 amplitude indicators set to indicate a maximum transmission symbol amplitude value; determine a plurality of indices corresponding to respective subsets of the first set of amplitude indicators, each subset of the first set of amplitude indicators having n1' amplitude indicators set to indicate the maximum transmission symbol amplitude value, each index specifying a respective subset from amongst a group of potential subsets having n1' indicators set to indicate the maximum transmission symbol amplitude value; perform a recursive procedure to generate, using the plurality of indices corresponding to respective subsets of the first set of amplitude indicators, a single index specifying the first set of amplitude indicators from amongst a group of potential sets of amplitude indicators having n1 indicators set to indicate the maximum transmission symbol amplitude value; and map the single index to a second set of information bits.

Embodiment 32: The apparatus of embodiment 31, wherein the processing circuitry is configured to: perform a recursive constant composition distribution matching procedure to generate the single index.

Embodiment 33: The apparatus of either of embodiments 31 or 32, wherein the processing circuitry is configured to: map the single index to the third set of information bits using n1.

Embodiment 34: The apparatus of embodiment 33, wherein the processing circuitry is configured to: perform a non-constant composition distribution matching operation, using n1, the single index to the third set of information bits.

Embodiment 35: The apparatus of embodiment 34, wherein the processing circuitry is configured to: successively generate larger indices based on the plurality of indices to generate the single index.

At least some of the various blocks, operations, and techniques described above may be implemented utilizing hardware, a processor executing firmware instructions, a processor executing software instructions, or any combination thereof. When implemented utilizing a processor executing software or firmware instructions, the software or firmware instructions may be stored in any computer readable memory coupled to the processor, such as a RAM, a ROM, a solid state memory, etc. The software or firmware instructions may include machine readable instructions that, when executed by one or more processors, cause the one or more processors to perform various acts.

When implemented in hardware, the hardware may comprise one or more of discrete components, an integrated circuit, an application-specific integrated circuit (ASIC), a programmable logic device (PLD), etc.

While the present invention has been described with reference to specific examples, which are intended to be illustrative only and not to be limiting of the invention, changes, additions and/or deletions may be made to the disclosed embodiments without departing from the scope of the invention.

**The following is a set of further preferred embodiments of the invention:**

Embodiment 1. A transceiver, comprising:

processing circuitry configured to:

receive information to be transmitted via one or more optical communication media, the information including a first set of information bits,

generate a second set of transmission symbols corresponding to the first set of information bits, the generation of the second set of transmission symbols including:
performing probabilistic constellation shaping to set, in the second set of transmission symbols, a quantity n1 of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including n1 amplitude indicators set to indicate the maximum transmission symbol amplitude value;

the processing circuitry being further configured to generate one or more drive signals based on the second set of transmission symbols; and

an optical transceiver configured to generate one or more optical transmit signals based on the one or more drive signals.

Embodiment 2. The transceiver of embodiment 1, wherein the processing circuitry is further configured to, as part of performing the recursive procedure:
perform a recursive constant composition distribution matching procedure to map the first set of information bits to the third set of amplitude indicators.

Embodiment 3. The transceiver of embodiment 1, wherein the processing circuitry is further configured to:
determine the quantity n1 of transmission symbols having the maximum transmission symbol amplitude value based on the first set of information bits.

Embodiment 4. **The** transceiver of embodiment 3, wherein the processing circuitry is further configured to:
perform a non-constant composition distribution matching procedure to determine the quantity n1 of transmission symbols having the maximum transmission symbol amplitude value based on the first set of information bits.

Embodiment 5. **The** transceiver of embodiment 4, wherein the processing circuitry is further configured to:

generate an index X' based on the first set of information bits, the index X' specifying the third set of amplitude indicators from amongst a group of potential third sets having n1 bits set to indicate the maximum transmission symbol amplitude value; and

perform a recursive constant composition distribution matching procedure, using the value n1, to map X' to the third set of amplitude indicators.

Embodiment 6. A method for transmitting information in a communication system, the method comprising:

receiving, at a processing circuitry of a transceiver, information to be transmitted, the information including a first set of information bits;

generating, by the processing circuitry, a second set of transmission symbols corresponding to the first set of information bits, including:
performing probabilistic constellation shaping to set, in the second set of transmission symbols, a quantity n1 of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including n1 amplitude indicators set to indicate the maximum transmission symbol amplitude value; and

generating, by the transceiver, a transmit signal based on the second set of transmission symbols.

Embodiment 7. **The** method for transmitting information of embodiment 6, wherein performing the recursive procedure to map the first set of information bits to the third set of amplitude indicators comprises:
performing a recursive constant composition distribution matching procedure to map the first set of information bits to the third set of amplitude indicators.

Embodiment 8. **The** method for transmitting information of embodiment 6, wherein performing probabilistic constellation shaping further comprises:
determining, by the processing circuitry, the quantity n1 of transmission symbols having the maximum transmission symbol amplitude value based on the first set of information bits.

Embodiment 9. **The** method for transmitting information of embodiment 8, wherein determining the quantity n1 of transmission symbols having the maximum transmission symbol amplitude value comprises:
performing, by the processing circuitry, a non-constant composition distribution matching procedure to determine the quantity n1 of transmission symbols having the maximum transmission symbol amplitude value based on the first set of information bits.

Embodiment 10. **The** method for transmitting information of embodiment 9, wherein performing probabilistic constellation shaping further comprises:

generating an index X' based on the first set of information bits, the index X' specifying the third set of amplitude indicators from amongst a group of potential third sets having n1 bits set to indicate the maximum transmission symbol amplitude value; and

wherein performing the recursive distribution matching procedure comprises performing a recursive constant composition distribution matching procedure, using the value n1, to map X' to the third set of amplitude indicators.

Embodiment 11. A method for decoding a received signal in a communication system, the method comprising:

receiving, at processing circuitry of a transceiver, a first set of amplitude indicators that corresponds to amplitudes of transmission symbols in a second set of transmission symbols received by the transceiver, the first set of amplitude indicators having n1 amplitude indicators set to indicate a maximum transmission symbol amplitude value, the second set of transmission symbols having been transmitted by a transmitter using probabilistic constellation shaping;

determining, by the processing circuitry, a plurality of indices corresponding to respective subsets of the first set of amplitude indicators, each subset of the first set of amplitude indicators having n1' amplitude indicators set to indicate the maximum transmission symbol amplitude value, each index specifying a respective subset from amongst a group of potential subsets having n1' indicators set to indicate the maximum transmission symbol amplitude value;

performing, by the processing circuitry, a recursive procedure to generate, using the plurality of indices corresponding to respective subsets of the first set of amplitude indicators, a single index specifying the first set of amplitude indicators from amongst a group of potential sets of amplitude indicators having n1 indicators set to indicate the maximum transmission symbol amplitude value; and

mapping, by the processing circuitry, the single index to a third set of information bits.

Embodiment 12. The method for decoding the received signal of embodiment 11, wherein performing the recursive procedure comprises:
performing a recursive constant composition distribution matching procedure to generate the single index.

Embodiment 13. The method for decoding the received signal of embodiment 11, wherein mapping, the single index to the third set of information bits comprises:
mapping the single index to the third set of information bits using n1.

Embodiment 14. The method for decoding the received signal of embodiment 13, wherein mapping, the single index to the third set of information bits comprises:
performing, by the processing circuitry, a non-constant composition distribution matching operation, using n1, the single index to the third set of information bits.

Embodiment 15. The method for decoding the received signal of embodiment 14, performing the recursive procedure comprises:
successively generating larger indices based on the plurality of indices to generate the single index.

Embodiment 16. A transceiver, comprising:

an optical transceiver configured to receive one or more optical signals, the one or more optical signals having been transmitted by a transmitter using probabilistic constellation shaping; and

processing circuitry configured to:

receive a first set of amplitude indicators that corresponds to amplitudes of transmission symbols in the one or more optical signals, the first set of amplitude indicators having n1 amplitude indicators set to indicate a maximum transmission symbol amplitude value,

determine a plurality of indices corresponding to respective subsets of the first set of amplitude indicators, each subset of the first set of amplitude indicators having n1' amplitude indicators set to indicate the maximum transmission symbol amplitude value, each index specifying a respective subset from amongst a group of potential subsets having n1' indicators set to indicate the maximum transmission symbol amplitude value,

perform a recursive procedure to generate, using the plurality of indices corresponding to respective subsets of the first set of amplitude indicators, a single index specifying the first set of amplitude indicators from amongst a group of potential sets of amplitude indicators having n1 indicators set to indicate the maximum transmission symbol amplitude value, and

map the single index to a second set of information bits.

Embodiment 17. The transceiver of embodiment 16, wherein the processing circuitry is configured to:
perform a recursive constant composition distribution matching procedure to generate the single index.

Embodiment 18. The transceiver of embodiment 16, wherein the processing circuitry is configured to:
map the single index to the third set of information bits using n1.

Embodiment 19. The transceiver of embodiment 18, wherein the processing circuitry is configured to:
perform a non-constant composition distribution matching operation, using n1, the single index to the third set of information bits.

Embodiment 20. The transceiver of embodiment 19, wherein the processing circuitry is configured to:
successively generate larger indices based on the plurality of indices to generate the single index.

**Claims**

1. A transceiver, comprising:

    processing circuitry configured to:

        receive information to be transmitted via one or more optical communication media, the information including a first set of information bits,
        generate a second set of transmission symbols corresponding to the first set of information bits, the generation of the second set of transmission symbols including:
        performing probabilistic constellation shaping to set, in the second set of transmission symbols, a quantity n1 of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including n1 amplitude indicators set to indicate the maximum transmission symbol amplitude value;

        the processing circuitry being further configured to generate one or more drive signals based on the second set of transmission symbols; and
        an optical transceiver configured to generate one or more optical transmit signals based on the one or more drive signals.

2. The transceiver of claim 1, wherein the processing circuitry is further configured to, as part of performing the recursive procedure:
perform a recursive constant composition distribution matching procedure to map the first set of information bits to the third set of amplitude indicators.

3. The transceiver of one of claims 1 to 2, wherein the processing circuitry is further configured to:
determine the quantity n1 of transmission symbols having the maximum transmission symbol amplitude value based on the first set of information bits.

4. The transceiver of claim 3, wherein the processing circuitry is further configured to:
perform a non-constant composition distribution matching procedure to determine the quantity n1 of transmission symbols having the maximum transmission symbol amplitude value based on the first set of information bits.

5. The transceiver of claim 4, wherein the processing circuitry is further configured to:

generate an index X' based on the first set of information bits, the index X' specifying the third set of amplitude indicators from amongst a group of potential third sets having n1 bits set to indicate the maximum transmission symbol amplitude value; and
perform a recursive constant composition distribution matching procedure, using the value n1, to map X' to the third set of amplitude indicators.

6. A method for transmitting information in a communication system, the method comprising:

receiving, at a processing circuitry of a transceiver, information to be transmitted, the information including a first set of information bits;
generating, by the processing circuitry, a second set of transmission symbols corresponding to the first set of information bits, including:
performing probabilistic constellation shaping to set, in the second set of transmission symbols, a quantity n1 of transmission symbols having a maximum transmission symbol amplitude value, the performing of the probabilistic constellation shaping including performing a recursive procedure to map the first set of information bits to a third set of amplitude indicators that corresponds to amplitudes of transmission symbols in the second set of transmission symbols, the third set of amplitude indicators including n1 amplitude indicators set to indicate the maximum transmission symbol amplitude value; and
generating, by the transceiver, a transmit signal based on the second set of transmission symbols.

7. The method for transmitting information of claim 6, wherein performing the recursive procedure to map the first set of information bits to the third set of amplitude indicators comprises:

performing a recursive constant composition distribution matching procedure to map the first set of information bits to the third set of amplitude indicators, or
wherein performing probabilistic constellation shaping further comprises:
determining, by the processing circuitry, the quantity n1 of transmission symbols having the maximum transmission symbol amplitude value based on the first set of information bits.

8. The method for transmitting information of claim 7, wherein determining the quantity n1 of transmission symbols having the maximum transmission symbol amplitude value comprises:
performing, by the processing circuitry, a non-constant composition distribution matching procedure to determine the quantity n1 of transmission symbols having the maximum transmission symbol amplitude value based on the first set of information bits.

9. The method for transmitting information of claim 8, wherein performing probabilistic constellation shaping further comprises:

generate an index X' based on the first set of information bits, the index X' specifying the third set of amplitude indicators from amongst a group of potential third sets having n1 bits set to indicate the maximum transmission symbol amplitude value; and
wherein performing the recursive distribution matching procedure comprises performing a recursive constant composition distribution matching procedure, using the value n1, to map X' to the third set of amplitude indicators.

10. A method for decoding a received signal in a communication system, the method comprising:

receiving, at processing circuitry of a transceiver, a first set of amplitude indicators that corresponds to amplitudes of transmission symbols in a second set of transmission symbols received by the transceiver, the first set of amplitude indicators having n1 amplitude indicators set to indicate a maximum transmission symbol amplitude value, the second set of transmission symbols having been transmitted by a transmitter using probabilistic constellation shaping;
determining, by the processing circuitry, a plurality of indices corresponding to respective subsets of the first set of amplitude indicators, each subset of the first set of amplitude indicators having n1' amplitude indicators set to indicate the maximum transmission symbol amplitude value, each index specifying a respective subset from amongst a group of potential subsets having n1' indicators set to indicate the maximum transmission symbol amplitude value;

performing, by the processing circuitry, a recursive procedure to generate, using the plurality of indices corresponding to respective subsets of the first set of amplitude indicators, a single index specifying the first set of amplitude indicators from amongst a group of potential sets of amplitude indicators having n1 indicators set to indicate the maximum transmission symbol amplitude value; and

mapping, by the processing circuitry, the single index to a third set of information bits.

11. The method for decoding the received signal of claim 10, wherein performing the recursive procedure comprises:
performing a recursive constant composition distribution matching procedure to generate the single index.

12. The method for decoding the received signal of one of claims 10 or 11, wherein mapping, the single index to the third set of information bits comprises:
mapping the single index to the third set of information bits using n1.

13. The method for decoding the received signal of claim 12, wherein mapping, the single index to the third set of information bits comprises:

performing, by the processing circuitry, a non-constant composition distribution matching operation, using n1, the single index to the third set of information bits, and/or
performing the recursive procedure comprises:
successively generating larger indices based on the plurality of indices to generate the single index.

14. A transceiver, comprising:

an optical transceiver configured to receive one or more optical signals, the one or more optical signals having been transmitted by a transmitter using probabilistic constellation shaping; and
processing circuitry configured to:

receive a first set of amplitude indicators that corresponds to amplitudes of transmission symbols in the one or more optical signals, the first set of amplitude indicators having n1 amplitude indicators set to indicate a maximum transmission symbol amplitude value,
determine a plurality of indices corresponding to respective subsets of the first set of amplitude indicators, each subset of the first set of amplitude indicators having n1' amplitude indicators set to indicate the maximum transmission symbol amplitude value, each index specifying a respective subset from amongst a group of potential subsets having n1' indicators set to indicate the maximum transmission symbol amplitude value,
perform a recursive procedure to generate, using the plurality of indices corresponding to respective subsets of the first set of amplitude indicators, a single index specifying the first set of amplitude indicators from amongst a group of potential sets of amplitude indicators having n1 indicators set to indicate the maximum transmission symbol amplitude value, and
map the single index to a second set of information bits.

15. The transceiver of claim 14, wherein the processing circuitry is configured to:

perform a recursive constant composition distribution matching procedure to generate the single index, or
wherein the processing circuitry is configured to:
map the single index to the third set of information bits using n1, and/or
wherein the processing circuitry is configured to:
perform a non-constant composition distribution matching operation, using n1, the single index to the third set of information bits, and/or
wherein the processing circuitry is configured to:
successively generate larger indices based on the plurality of indices to generate the single index.

## FIG. 1

Maps set of information bits to set of amplitude indicators that corresponds to amplitudes of transmission symbols in to be transmitted; determines, for the set of amplitude indicators, a quantity n1 of amplitude indicators set to a maximum amplitude value, and performs a recursive constant composition distribution matching encoding procedure to successively generate, using n1, sets of increasingly smaller sequences such that each set of sequences indicates n1 transmission symbol amplitudes having the maximum amplitude value

＾100

Processing Circuitry 104

PCS 116

Transmit Information Bits →

| Distribution Matcher Encoder Circuitry 160 | → | FEC Encoder 120 | → | Const Map 124 | → | DAC 128 |

Drive Signals Corresponding to Transmission Symbols

Optical Transceiver 108

→ Optical Transmit Signal

← Optical Receive Signal

Receive Information Bits ←

| Distribution Matcher Decoder Circuitry 164 | ← | FEC Decoder 148 | ← | Const De-Map 144 | ← | ADC 140 |

Receive Electrical Signals Corresponding to Received Transmission Symbols

Determines respective parameters n1 for subsets of a set amplitude indicators corresponding to received transmission symbols, each n1 corresponding to a quantity of amplitude indicators in the corresponding subset set to the maximum amplitude; performs a recursive constant composition distribution matching decoding procedure to successively generate, using the n1 parameters, sets of increasingly larger indices to generate an output index that indicates a set of information bits

EP 4 683 281 A1

**FIG. 2**

**FIG. 3**

Multiplication $M(A, B, n_{iter})$
Inputs: $A, B \in \mathbb{N}$
$\cdots\cdots n_{iter}$: number of iterations
Output: combinatorial approx. of $A \cdot B$

1. → if $A = 0$ or $B = 0$
2. → $\cdots$ return $0$
3. → $a \leftarrow trunc(A, 1)$
4. → if $n_{iter} = 1$
5. → $\cdots$ return $a \cdot B$
6. → else
7. → $\cdots$ return $a \cdot B + M(B, A - a, n_{iter} - 1)$
8. → endif

**FIG. 4**

$trunc(x, r)$
Inputs: $x \in \mathbb{N}$
→ $r$: number of significant bits
Output: an approximation of $x$ using only the $r$ most significant bits

1. → if $x \leq 1$
2. → $\cdots$ return $x \cdots$
3. → $n \leftarrow \lceil \log_2(x) \rceil$
4. → if $n > r \cdots$
5. → $\cdots$ $m \leftarrow 2^{n-r}$
6. → $\cdots$ return $m \cdot \lfloor x/m \rfloor$
7. → else
8. → $\cdots$ return $x$
9. → endif

**FIG. 5A**

500

| First Iteration 504 | Ignored Sequences 508 |

B

a1

A

**FIG. 5B**

| First Iteration 504 | Ignored Sequences 516 |
| | Second Iteration 512 |

A2

a2

B2

**FIG. 5C**

A3

a3

| First Iteration 504 | Third Iteration 520 | Ignored Sequences 524 |
| | Second Iteration 512 | |

B3

*FIG. 6*

---

**Encoder — NCC Stage**
**Inputs:**
    $N$ : length of sequence
    $X \in \mathbb{N},\ 0 \leq X < 2^K$
**Outputs:**
    $n_1$ : number of 1s in the output word
    $X'$ : index of generated word with $n_1$

---

    1. $n_1 \leftarrow n : T_{N,n-1} \leq X < T_{N,n}$
    2. $X' \leftarrow X - T_{N,n_1-1}$
    3. return $n_1, X'$

---

*FIG. 7*

---

$$Select\_n_{1b}(N, n_1, X)$$

**Inputs:**
    $N$ : length of sequence
    $n_1$ : number of 1s in the output word
    $X \in \mathbb{N},\ 0 \leq X < S_{N,n_1}$
**Outputs:**
    $n_{1b}$ : number of 1s in the lower half word
    $X'$ : index of generated word with $n_{1b}$

---

    1. $n_{1b} \leftarrow n : 2 \cdot U_{N,n_1,n-1} \leq X < 2 \cdot U_{N,n_1,n}$
    2. $X' \leftarrow X - 2 \cdot U_{N,n_1,n_{1b}-1}$
    3. return $n_{1b}, X'$

FIG. 8

$$Div(X, A, B)\P$$

**Inputs:**···¶
····$X, A, B \in \mathbb{N},°0 \leq X < A \cdot B$¶
**Outputs:**¶
····$X_a, X_b \in \mathbb{N}$¶
¶

¶
    1.→·$a \leftarrow trunc(A, 1)$¶
    2.→·**if**·$X < a \cdot B$¶
    3.→·····$X_a \leftarrow X°mod(a)$¶
    4.→·····$X_b \leftarrow °\lfloor X/a \rfloor$¶
    5.→·····**return**·$X_a,°X_b$¶
    6.→·**else**¶
    7.→·····$X_1,°X_2 \leftarrow Div(X - aB,°B, A - a)$¶
    8.→·····$X_a \leftarrow X_1$¶
    9.→·····$X_b \leftarrow X_2 + a$¶
    10.→·····**return**·$X_b,°X_a$¶
    11.→··**endif**¶

# *FIG. 9*

Encoder·Memory·Initialization¶
Input:···¶
····$L$:·Length·of·sequences¶
Output:¶
····$E$:·Precomputed·sequences·of·$L$·bits¶
¶

¶

1. → **for**··$n_1 = 0$·**to**·$L$¶
2. → ·······**if**·$n_1 \leq L/2$¶
3. → ···········$E_{n_1} \leftarrow \emptyset$¶
4. → ···········**for**·$i = 0$·**to**·$2^L$¶
5. → ···············$C \leftarrow$·binary·form·of·$i$¶
6. → ···············**if**·$\sum_{j=0}^{L-1} C_j = n_1$¶
7. → ·················**while**·$C \notin E_{n_1}$¶
8. → ·····················add·$C$·to·$E_{n_1}$¶
9. → ·····················$C_0, C_1^{L-1} \leftarrow C_{L-1}, C_0^{L-2}$¶
10. → ················**endwhile**¶
11. → ··············**endif**·¶
12. → ··········**endfor**¶
13. → ······**else**¶
14. → ·········$E_{n_1} \leftarrow \overline{E_{L-n_1}}$·¶
15. → ······**endif**¶
16. → **endfor**¶
17. → **return**·$E$·······¶

## FIG. 10

Encoder Core: $Enc(N, L, n_1, X)$

Inputs:

   $N$: length of output sequence

   $L$: length of sequences stored in the ROMs

   $n_1$: number of 1s in the output word

   $X$: word index, with $0 \leq X < S_{N,n_1}$

Output:

   $C$: the $X$-th word of length $N$ with $n_1$ 1s

---

1. if $N = L$
2.    $C \leftarrow$ read $X$-th word from ROM with $n_1$
3. else
4.    $n_1' \leftarrow min\{n_1, N - n_1\}$
5.    $n_{1b}, X' = Select\_n_{1b}(N, n_1', X)$
6.    $n_{1a} \leftarrow n_1' - n_{1b}$
7.    $y \leftarrow False$
8.    if $n_{1a} \neq n_{1b}$
9.      if $X'$ is odd
10.        $y \leftarrow True$
11.      endif
12.      $X' \leftarrow X'/2$
13.    endif
14.    $X_a, X_b \leftarrow Div(X', S_{N/2, n_{1a}}, S_{N/2, n_{1b}})$
15.    if $n_1 > N/2$
16.      $n_{1a} \leftarrow N/2 - n_{1a}$
17.      $n_{1b} \leftarrow N/2 - n_{1b}$
18.    endif
19.    if $y = True$
20.      swap $n_{1a}$ with $n_{1b}$
21.      swap $X_a$ with $X_b$
22.    endif
23.    $C_0^{N/2-1} \leftarrow Enc(N/2, L, n_{1a}, X_a)$
24.    $C_{N/2}^N \leftarrow Enc(N/2, L, n_{1b}, X_b)$
25. endif
26. return $C$

## FIG. 11

1000

## FIG. 12

$$Mul(N, A, °B, °X_a, °X_b)¶$$

**Inputs:**···¶
····N:·Length·of·input·sequence¶
····$A, B$:·Total·number·of·words¶
····$X_a$:·Enumeration·of·lower·half·word¶
····$X_b$:·Enumeration·of·higher·half·word¶
**Output:**·¶
····$X$:··Enumeration·of·the·full·word¶

---

¶

1.→·$a \leftarrow trunc(A, 1)$·¶
2.→·**if**·$X_a < a$¶
3.→····$X \leftarrow X_a + a \cdot X_b$¶
4.→·**else**¶
5.→····$X \leftarrow a \cdot B + Mul(N, B, A - a, X_b, X_a - a)$¶
6.→·**return**·$X$¶

EP 4 683 281 A1

## FIG. 13

**Decoder Core: $Dec(C, °L)$**
**Inputs:**
  C: input sequence
  $L$: length of sequences stored in the ROMs
**Output:**
  $n_1$: number of 1s in $C$
  $X$: index of $C$

---

1. $N° \leftarrow$ length of $C$
2. $n_1 \leftarrow °\sum_{i=0}^{N} C_i$
3. if $N = L$
4. $X° \leftarrow$ read index of $C$ from ROM
5. else
6. $n_{1a}, °X_a \leftarrow Dec(C_0^{N/2-1}, °L)$
7. $n_{1b}, X_b \leftarrow Dec(C_{N/2}^{N}, °L)$
8. if $n_1 > N/2$
9. $n_{1a} \leftarrow N/2 - n_{1a}$
10. $n_{1b} \leftarrow N/2 - n_{1b}$
11. endif
12. $n_1' \leftarrow n_{1a} + n_{1b}$
13. $d \leftarrow 0$
14. if $n_{1a} < n_{1b}$
15. swap $n_{1a}$ with $n_{1b}$
16. swap $X_a$ with $X_b$
17. $d \leftarrow 1$
18. endif
19. $X \leftarrow °Mul\left(N, °S_{N/2, n_{1a}}, °S_{N/2, n_{1b}}, X_a, X_b\right)$
20. if $n_{1a} \neq n_{1b}$
21. $X \leftarrow 2 \cdot X + d$
22. endif
23. $X \leftarrow X + 2 \cdot U_{N, n_1', n_{1b}-1}$
24. endif
25. return $n_1, X$

34

*FIG. 14*

Decoder — NCC Stage

Inputs:
$N$: length of sequence
$n_1$: number of 1s in the output word
$X'$: index of generated word with $n_1$

Output:
$X$: index of word with at least $n_1$ 1s

1. $X \leftarrow X' + T_{N,n_1-1}$
2. return $X$

*FIG. 15*

1400

```
Receive information to be transmitted, the information including
a first set of information bits
1404
```

```
Generate a second set of transmission symbols corresponding
to the first set of information bits, including:
performing probabilistic constellation shaping to set, in
the second set of transmission symbols, a quantity n1 of
transmission symbols having a maximum transmission symbol
amplitude value, the performing of the probabilistic
constellation shaping including performing a recursive
procedure to map the first set of information bits to a third set
of amplitude indicators that corresponds to amplitudes of
transmission symbols in the second set of transmission
symbols, the third set of amplitude indicators including n1
amplitude indicators set to indicate the maximum transmission
symbol amplitude value
1408
```

```
Generate a transmit signal based on the second set of
transmission symbols
1412
```

# FIG. 16

1500

Receive a first set of amplitude indicators that corresponds to amplitudes of transmission symbols in a second set of transmission symbols received by the transceiver, the first set of amplitude indicators having n1 amplitude indicators set to indicate a maximum transmission symbol amplitude value, the second set of transmission symbols having been transmitted by a transmitter using probabilistic constellation shaping.
1504

Determine a plurality of indices corresponding to respective subsets of the first set of amplitude indicators, each subset of the first set of amplitude indicators having n1' amplitude indicators set to indicate the maximum transmission symbol amplitude value, each index specifying a respective subset from amongst a group of potential subsets having n1' indicators set to indicate the maximum transmission symbol amplitude value
1508

Perform a recursive procedure to generate, using the plurality of indices corresponding to respective subsets of the first set of amplitude indicators, a single index specifying the first set of amplitude indicators from amongst a group of potential sets of amplitude indicators having n1 indicators set to indicate the maximum transmission symbol amplitude value
1512

Map the single index to a third set of information bits
1516

Europäisches
Patentamt

European
Patent Office

Office européen
des brevets

# EUROPEAN SEARCH REPORT

**Application Number**

EP 25 18 9885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICK SCHULTE ET AL: "Constant Composition Distribution Matching", IEEE TRANSACTIONS ON INFORMATION THEORY, , vol. 62, no. 1 31 January 2016 (2016-01-31), pages 430-434, XP002777173, Retrieved from the Internet: URL:http://ieeexplore.ieee.org/stamp/stamp.jsp?arnumber=7322261 [retrieved on 2018-01-09] | 1,2,6,7, 10-15 | INV. H04L27/34 |
| A | * page 433 * | 3-5,8,9 | |

-----

**TECHNICAL FIELDS SEARCHED (IPC)**

H04L

The present search report has been drawn up for all claims

| Place of search | Date of completion of the search | Examiner |
|---|---|---|
| Berlin | 11 December 2025 | Douglas, Ian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................................
& : member of the same patent family, corresponding
document

EPO FORM 1503 03.82 (P04C01)

**EP 4 683 281 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63671986